(19)

Europäisches Patentamt

European Patent Office

Office européen des brevets

(11) **EP 3 364 212 B1**

(12) **EUROPEAN PATENT SPECIFICATION**

(45) Date of publication and mention of the grant of the patent:
**27.08.2025 Bulletin 2025/35**

(21) Application number: **17156196.2**

(22) Date of filing: **15.02.2017**

(51) International Patent Classification (IPC):
**G01S 13/90** (2006.01)    **G01S 7/40** (2006.01)

(52) Cooperative Patent Classification (CPC):
**G01S 13/90; G01S 7/4021; G01S 7/4052; G01S 7/4091; G01S 13/9023;** G01S 7/403; G01S 7/4034

(54) **A METHOD AND AN APPARATUS FOR COMPUTER-ASSISTED PROCESSING OF SAR RAW DATA**

VERFAHREN UND VORRICHTUNG ZUR COMPUTERGESTÜTZTEN VERARBEITUNG VON SAR-ROHDATEN

PROCÉDÉ ET APPAREIL DE TRAITEMENT DE DONNÉES BRUTES SAR, ASSISTÉ PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.08.2018 Bulletin 2018/34**

(73) Proprietor: **Deutsches Zentrum für Luft- und Raumfahrt e.V.**
**51147 Köln (DE)**

(72) Inventor: **Jäger, Marc**
**80687 München (DE)**

(74) Representative: **Fink Numrich**
**Patentanwälte PartmbB**
**Paul-Gerhardt-Allee 24**
**81245 München (DE)**

(56) References cited:
**US-A1- 2008 150 793**

• **DALE C GRIFFITH: "Phase Error Compensation Technique for Improved Synthetic Aperture Radar Performance", JOHNS HOPKINS APL TECHNICAL DIGEST, vol. 18, no. 3, 1 January 1997 (1997-01-01), pages 358 - 364, XP055383275**

• **PING WEN JIANG ET AL: "External caubration of the CRS-1 satellite", COMPUTATIONAL ELECTROMAGNETICS AND ITS APPLICATIONS, 2004. PROCEEDINGS . ICCEA 2004. 2004 3RD INTERNATIONAL CONFERENCE ON BEIJING, CHINA NOV. 1-4, 2004, PISCATAWAY, NJ, USA,IEEE, 1 November 2004 (2004-11-01), pages 395 - 398, XP010812101, ISBN: 978-0-7803-8562-7, DOI: 10.1109/ ICCEA.2004.1459375**

• **PAU PRATS-IRAOLA ET AL: "High precision SAR focusing of TerraSAR-X experimental staring spotlight data", GEOSCIENCE AND REMOTE SENSING SYMPOSIUM (IGARSS), 2012 IEEE INTERNATIONAL, IEEE, 22 July 2012 (2012-07-22), pages 3576 - 3579, XP032468576, ISBN: 978-1-4673-1160-1, DOI: 10.1109/ IGARSS.2012.6350644**

• **FREEMAN A: "SAR CALIBRATION: AN OVERVIEW", IEEE TRANSACTIONS ON GEOSCIENCE AND REMOTE SENSING, IEEE SERVICE CENTER, PISCATAWAY, NJ, US, vol. 30, no. 6, 1 November 1992 (1992-11-01), pages 1107 - 1121, XP000336641, ISSN: 0196-2892, DOI: 10.1109/36.193786**

• **GRAY A L ET AL: "SYNTHETIC APERTURE RADAR CALIBRATION USING REFERENCE REFLECTORS", IEEE TRANSACTIONS ON GEOSCIENCE AND REMOTE SENSING, IEEE SERVICE CENTER, PISCATAWAY, NJ, US, vol. 28, no. 3, 1 May 1990 (1990-05-01), pages 374 - 382, XP000128243, ISSN: 0196-2892, DOI: 10.1109/ 36.54363**

EP 3 364 212 B1

**Description**

The invention refers to a method and an apparatus for computer-assisted processing of SAR raw data.

Synthetic aperture radar (SAR) is a technique for remote sensing that is being used increasingly in imaging, monitoring and investigation on the earth's surface. A SAR radar system consists of a flying object, e.g. a satellite or an airplane, which moves at a constant speed, and a radar sensor that points in a direction orthogonal to the direction of motion. The radar sensor periodically transmits electromagnetic waves and records the echoes of those waves reflected on ground.

In standard SAR sensor operation, SAR raw data acquisitions are followed by a computationally intensive processing step called image formation or SAR focussing in which echoes recorded in the SAR raw data are back-projected onto the ground to yield the actual image of the scene. To provide useful results, this processing must also ensure an accurate sensor calibration that enables users of the data to relate the SAR sensor measurement to physical parameters of interest and geolocate this information.

SAR sensor calibration consists of an internal calibration and an external calibration. The internal calibration is based on measurements performed internally by the SAR sensor itself. These measurements typically use dedicated hardware to regularly monitor the sensor state that can later be used to compensate for temporal variations in the transmitted electromagnetic wave and any signal distortions that occur when echoes from the image scene are received and recorded.

External SAR sensor calibration is based on the analysis of reference targets with known radar cross sections and positions on ground. The reference targets may be active transponders that transmit signals in response to incoming radar pulses or passive reference targets, such as dihedral of trihedral radar reflectors, which reflect transmitted radar pulses back towards the radar sensor.

Conventionally, external calibration is based on the SAR images derived from the SAR raw data. To do so, calibration factors are determined based on a comparison of the characteristics of the reference targets in the SAR images with the known characteristics of these reference targets. This calibration is very complex, as it requires SAR images and therefore SAR image formation on the basis of SAR raw data.

Document Ping Wen Jiang et al.: "External calibration of the CRS-1 satellite", Proceedings of the 3rd International Conference on Computational Electromagnetics and its Applications, 1 November 2004, p. 395-398, discloses an external calibration using active reference targets where the calibration is based on SAR images.

Document Dale C. Griffith: "Phase Error Compensation Technique for Improved Synthetic Aperture Radar Performance", John Hopkins APL Tech. Digest, vol. 18, no. 3, 1 January 1997, p. 358-364, describes a phase error compensation technique used in SAR processing where phase errors of reference targets within the SAR image are removed.

Document Pau Prats-Iraola et al.: "High precision SAR focusing of TerraSAR-X experimental staring spotlight data", International Geoscience and Remote Sensing Symposium, 22 July 2012, p. 3576-3579, discloses the focusing of SAR images in a special SAR acquisition mode named "staring spotlight".

It is an object of the invention to provide a method for computer-assisted processing of SAR raw data that establishes an external calibration in an easy and efficient way.

This object is solved by the method according to claim 1 and the apparatus according to claim 12, respectively. Preferred embodiments of the invention are described in the dependent claims.

The method of the invention provides a computer-assisted processing of SAR raw data, comprising radar echoes from ground (i.e. the earth's surface) that are the response to radar pulses that have been transmitted by antenna elements of a radar sensor on at least one flying object (e.g. a single flying object) moving in an azimuth direction above ground and where the radar echoes have been received by antenna elements of the radar sensor. The flying object may refer to an airplane, a satellite or the like. The SAR raw data comprise several data channels, each of which includes radar echoes originating from reference targets with known radar cross sections and positions on ground. Each channel is identified by the combination of two antenna elements used to transmit pulses and receive echoes, and the data acquisition for a channel comprises a plurality of data samples for several azimuth positions and several range positions, the range positions corresponding to different distances from the radar sensor to ground.

The method of the invention comprises one or more calibration procedures. Each calibration procedure includes steps i) and ii) described in the following. Step i) uses the known radar cross section and position on ground for each reference target in order to extract target data for each reference target in each channel from the SAR raw data and in order to determine a variation of one or more measurements over different radar echoes (i.e. radar echoes received in response to different radar pulses) originating from each reference target for each channel or for each combination of two channels based on the target data. The term "measurement" is to be interpreted broadly and may refer to any value which can be derived from the target data. The term "measurement" was chosen because the target data are based on SAR raw data which form measured values.

In a step ii), one or more calibration factors in the form of one or more correction terms for one or more sensor parameters of the radar sensor are determined based on an optimisation comprising the optimisation goal to (simultaneously) minimise the variation of one or more measurements for all reference targets and for all channels or all combinations of two channels. The above minimisation can be defined in terms of corresponding error functions, where examples of such error functions are given in the detailed description.

In a preferred embodiment, the measurements defined above refer to a residual phase and/or to a residual delay and/or to the difference between two residual phases for two channels and/or to a radar cross section offset. These quantities are defined as described with respect to embodiments explained later on. Furthermore, the one or more sensor parameters preferably refer to antenna mount angles of each antenna element and/or relative positions of the phase centres of the antenna elements with respect to a reference position on the at least one flying object.

The method of the invention has the advantage that calibration factors can be derived from the SAR raw data without focusing corresponding SAR images. This is especially important in situations where image focusing presupposes precise calibration (e.g. for sensors that employ beamforming). In addition, the approach provides a systematic way for analysing and correcting propagation direction dependent calibration issues, which is not the case for conventional techniques. Calibration is achieved by an optimisation designed to minimise the variation of measurements for all reference targets and for all channels or all combinations of two channels. The invention results in reliable calibration factors that can be used to improve image quality when processing new SAR raw data acquired by the radar sensor over areas that do not include reference targets. To do so, the calibration factors are applied to the respective sensor parameters during SAR image focusing.

In a preferred embodiment of the method according to the invention, the one or more calibration procedures comprise a first calibration procedure. In this first calibration procedure, the variation of a measurement determined in step i) refers to the variation of a radar cross section offset over different radar echoes originating from each reference target in each channel. Furthermore, correction terms for sensor parameters in the form of antenna mount angles of each antenna element on the at least one flying object are determined in step ii). In this embodiment, the radar cross section offset represents the difference between the known radar cross section and the radar cross section according to the target data for the respective reference target and the respective channel.

In another embodiment of the invention, the one or more calibration procedures comprise a second calibration procedure. According to the second calibration procedure, the variation of a measurement determined in step i) refers to the variation of a residual phase over different radar echoes originating from each reference target in each channel. In this embodiment, correction terms for sensor parameters in the form of relative positions of the phase centres of the antenna elements with respect to a reference position on the at least one flying object are determined in step ii). The residual phase for a respective channel represents the difference between the (expected) phase of a radar echo based on the positions of the transmitting and receiving antenna element phase centres of the respective channel and based on the known position of the respective reference target on ground on the one hand and the phase according to the target data for the respective reference target on the other hand. In a preferred variant of this embodiment, the optimisation within the second calibration procedure includes the additional optimisation goal to minimise the mean residual delay over different radar echoes originating from each reference target in each channel, where the residual delay for a respective channel represents the difference between the (expected) propagation time from transmitting a radar pulse until receiving its radar echo based on the positions of the transmitting and receiving antenna element phase centres of the respective channel and based on the known position of the respective reference target on ground on the one hand and the corresponding propagation time according to the target data for the respective reference target on the other hand. In case that embodiments refer to positions of the transmitting and receiving antenna element phase centres, these positions can be determined with well-known methods during data acquisition, e.g. by using a navigation system of the at least one flying object. These positions initially contain residual errors which may later be compensated by calibration factors.

According to another embodiment, the one or more calibration procedures comprise a third calibration procedure. According to this third calibration procedure, the variation of a measurement determined in step i) refers to the variation of the difference between two residual phases for two (different) channels over different radar echoes originating from each reference target in each combination of two (different) channels. Furthermore, correction terms for sensor parameters in the form of relative positions of the phase centres of the antenna elements with respect to a reference position on the at least one flying object are determined in step ii). In this embodiment, the residual phase for a respective channel represents the difference between the phase of a radar echo based on the positions of the transmitting and receiving antenna element phase centres of the respective channel and based on the known position of the respective reference target on ground on the one hand and the phase according to the target data for the respective reference target on the other hand. The third calibration procedure is preferably performed as a refinement of the above described second calibration procedure.

With respect to the first, second and third calibration procedures defined above, the method can comprise any combination of those calibration procedures or only one of those calibration procedures. In a preferred embodiment, the method comprises the first and the second and the third calibration procedures, resulting in very accurate calibration factors. Preferably, the third calibration procedure is performed after the second calibration procedure and the second calibration procedure is performed after the first calibration procedure.

In a preferred variant, the method according to the invention comprises several calibration procedures which are performed based on an iteration, where each calibration procedure constitutes an iteration step and where step i) of an iteration step (i.e. the associated calibration procedure) takes into account one or more calibration factors determined in all preceding iteration steps. This embodiment enables an improved calibration by iteratively combining several calibration procedures.

In another embodiment of the invention, the extraction of target data for each reference target and each channel in step i) of at least one calibration procedure comprises a well-known range compression as well as a correction based on the known radar cross section and the known position of the respective reference target on ground. In a preferred variant of this embodiment, the correction is further based on the antenna diagrams of the transmitting and receiving antenna elements associated with the respective channel and/or based on the expected propagation time from the phase centre of the transmit antenna element to the respective reference target and back to the phase centre of the receive antenna element in the respective channel and/or based on internal calibration data acquired by recording pulses that have traversed the same transmit and receive branches in the radar sensor as target data in the respective channel. The expected propagation time is determined based on the positions of the transmitting and receiving antenna element phase centres of the respective channel and based on the known position of the respective reference target on ground.

In another preferred embodiment, the extraction of target data for each reference target and each channel in step i) of at least one calibration procedure comprises a clutter suppression operation for suppressing radar echoes originating from scatterers other than the respective reference target.

In another preferred embodiment, the method of the invention comprises a separate calibration procedure in addition to the one or more calibration procedures, where the separate calibration procedure comprises steps a) and b) described in the following. According to step a), by using the known radar cross section and position on ground for each reference target, target data for each reference target in each channel are extracted from the SAR raw data and the variation of a residual delay over different radar echoes originating from each reference target in each channel is determined. The residual delay for a respective channel represents the difference between the (expected) propagation time from transmitting a radar pulse until receiving its radar echo based on the positions of the transmitting and receiving antenna element phase centres of the respective channel and based on the known position of the respective reference target on ground on the one hand and the corresponding propagation time according to the target data for the respective reference target on the other hand.

According to step b), frequency-dependent phase and amplitude variations within the bandwidth of the radar echoes are estimated by determining calibration factors in the form of correction terms for the respective antenna elements based on a (simultaneous) minimisation of error functions, where at least one error function (preferably two error functions) is defined over different radar echoes originating from each reference target in each channel. The at least one error function is defined based on a frequency response function for each radar echo originating from the respective reference target in the respective channel, where the frequency response function is derived from the target data and the variation of the residual delay obtained in step a). The above calibration factors can be applied to the respective antenna elements during SAR image focusing.

In a preferred variant of the above embodiment, the separate calibration procedure is part of the above defined iteration and forms an iteration step therein, where step i) of all iteration steps (if any) after the iteration step of the separate calibration procedure takes into account the correction terms determined in step b). In one embodiment, the separate calibration procedure is performed before any other calibration procedure.

In another preferred embodiment of the method according to the invention, after performing the one or more calibration procedures, one or more calibration constants, particularly a gain and/or delay and/or phase shift for each (individual) antenna element, are determined. These calibration constants are provided to be applied in a later processing of other SAR raw data as overall, constant corrections to the entire SAR raw data set or entire images derived from the SAR raw data.

Besides the above method, the invention also refers to an apparatus for computer-assisted processing of SAR raw data, comprising radar echoes from ground that are the response to radar pulses that have been transmitted by antenna elements of a radar sensor on at least one flying object moving in an azimuth direction above ground and where the radar echoes have been received by antenna elements of the radar sensor. The SAR raw data comprise several data channels, each of which includes radar echoes originating from reference targets with known radar cross sections and positions on ground. Each channel is identified by the combination of two antenna elements used to transmit pulses and receive echoes, and the data acquisition for a channel comprises a plurality of data samples for several azimuth positions and several range positions, the range positions extending in a range direction perpendicular to the azimuth direction. This apparatus is configured to perform the method according to the invention or one or more preferred embodiments thereof. In other words, the apparatus comprises means in the form of hardware and/or software in order to perform steps i) and ii) as defined in claim 1.

The invention also refers to a computer program product comprising program code stored on a machine readable medium, where the program code is configured to perform a method according to the invention or one or more preferred embodiments thereof, when the program code is run on a computer.

Furthermore, the invention refers to a computer program comprising program code which is configured to perform a method according to the invention or one or more preferred embodiments thereof, when the program code is run on a computer.

In the following, embodiments of the invention will be described in detail with respect to the accompanying drawings wherein:

Fig. 1    is a schematic drawing illustrating the acquisition of SAR raw data in the context of the invention; and

Fig. 2    shows flow charts describing the steps performed in an embodiment of the invention.

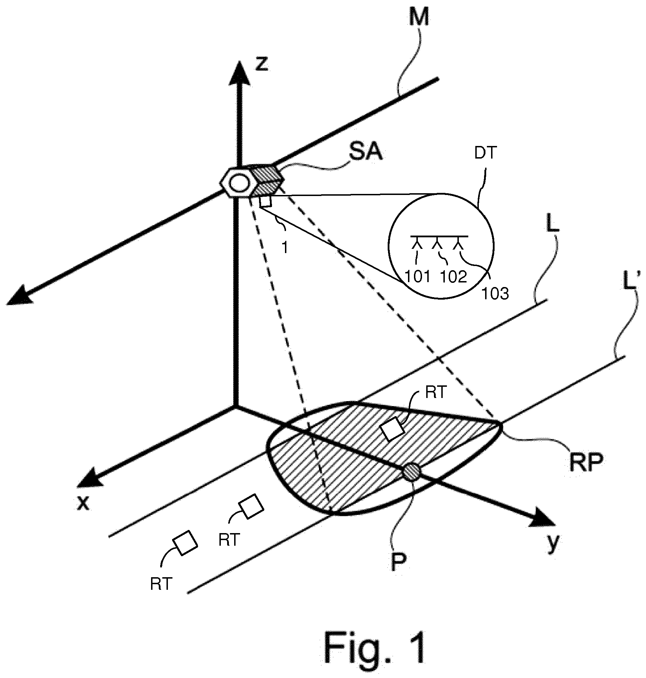

For better understanding, the acquisition of SAR raw data based on radar pulses transmitted from a satellite will be described based on Fig. 1. When acquiring the SAR raw data, the satellite SA moves in the direction indicated by arrow M which is the direction along the x-axis of the Cartesian coordinate system shown in Fig. 1. The direction along the x-axis is designated as the azimuth direction. The satellite SA flies at an altitude above the Earth's ground that is represented by the z-coordinate of the Cartesian coordinate system. The satellite SA comprises a radar sensor 1. As can be seen from the detailed view DT in Fig. 1, this radar sensor 1 comprises several antenna elements 101, 102 and 103. The number of three antenna elements is only an example and the radar sensor 1 can comprise more or less of such antenna elements. In the embodiment described herein, the radar sensor is configured to transmit radar pulses through individual antenna elements at a predetermined pulse repetition frequency and to receive the echoes of the transmitted radar pulses through one or more antenna elements, which may include the element used for transmitting. The radar echoes are recorded by the radar sensor 1 and form the SAR raw data. In Fig. 1, a radar pulse transmitted by the radar sensor 1 is represented by its contour on the Earth's surface and is designated by reference numeral RP.

The radar echo of each transmitted radar pulse is recorded by sampling the radar radiation reflected on ground in time. The propagation time is directly related to a range distance by the speed of light, while the propagation direction (range direction) varies along the y-axis of the Cartesian coordinate system. In the embodiment shown in Fig. 1, all the information of the radar echoes between the lines L and L' is recorded for each transmitted pulse. Both lines have a predetermined range distance that depend on the sensor and the imaging configuration and define the width of the imaged swath. The hatched region of the radar pulse RP indicates the information recorded by the radar sensor for each transmitted pulse.

The acquired SAR raw data comprise data sets for several combinations of a transmitting antenna element and a receiving antenna element, where each transmit/receive combination is designated as a channel. Several antenna elements may receive and record the echoes of a single transmitted pulse at the same time, such that several channels can be acquired simultaneously. In the embodiment of Fig. 1, there are nine channels as each antenna element can transmit radar pulses and receive radar echoes. The data acquisition for each channel comprises data samples for a plurality of azimuth positions and a plurality of range positions.

The principle of a SAR measurement is based on the fact that individual points on the Earth's ground are recorded from different angles due to the movement of the satellite SA. This is illustrated by point P in Fig. 1. This point P is, in the scenario of Fig. 1, at the point of closest approach to the satellite SA. By the movement of the satellite in the direction M, this distance will become greater. As the sensor approaches the position in Fig. 1, on the other hand, this distance was decreasing. Due to the Doppler effect, a frequency shift of the recorded radar echoes occurs and can be analysed. As a consequence, all echoes from any given point can be coherently focussed to yield high resolution maps of scattering amplitude and phase. This information constitutes the final SAR image.

The method described in the following determines appropriate external calibration factors and calibration constants for a SAR radar sensor, such as sensor 1 of Fig. 1. To enable this external calibration, radar echoes of reference targets with known radar cross sections and known positions on ground are recorded during the SAR data acquisition. As an example, the locations of such reference targets RT are indicated in Fig. 1. The reference targets may be passive reflectors, such as dihedral or trihedral radar reflectors, or transponders that actively transmit signals in response to received radar pulses. According to the invention, the calibration factors and calibration constants are obtained directly from the SAR raw data without analysing SAR images derived therefrom. Conventional calibration methods, on the other hand, are based on analysing SAR images and not the underlying SAR raw data.

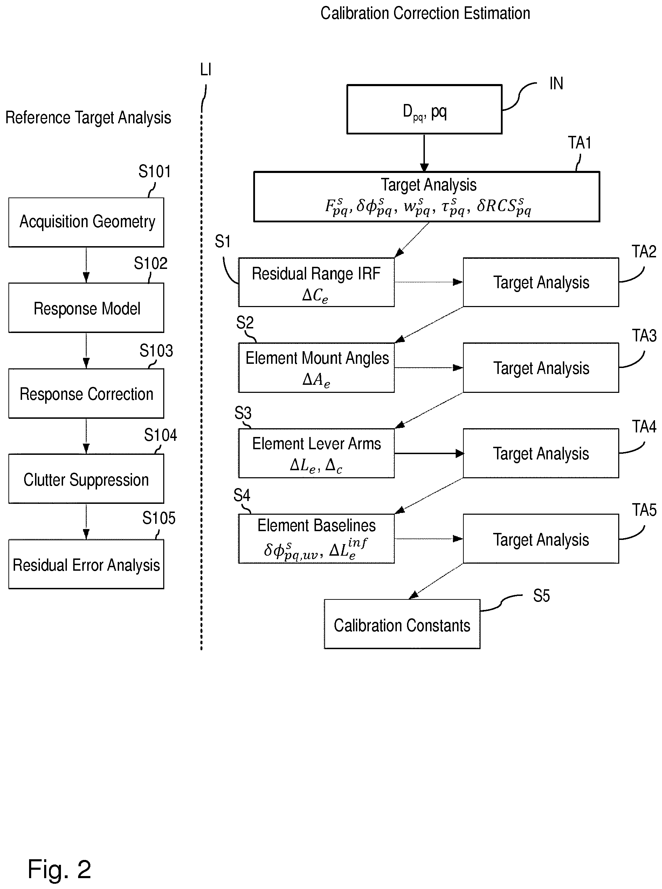

In the following, a general outline of the steps performed according to an embodiment of the invention will be described with respect to Fig. 2. Thereafter, a detailed mathematical description of the corresponding steps indicated in Fig. 2 is given.

The diagram of Fig. 2 shows two flow charts separated by the vertical dashed line LI. The right flow chart refers to the calibration correction estimation, comprising several target analyses TA1, TA2, TA3, TA4 and TA5. The sub-steps of each of those target analyses are the same and are shown in the left flow chart of Fig. 2. The calibration correction estimation uses as input IN the data acquisitions $D_{pq}$ for each channel pq, where p denotes the index of a transmitting antenna element and q denotes the index of a receiving antenna element. The method begins with a target analysis TA1 which is repeatedly carried out in the course of the method. In order to distinguish between the target analyses, different reference numerals TA1, TA2, TA3, TA4 and TA5 are used although the sub-steps in each analysis are the same and correspond to the sub-steps shown in the left flow chart of Fig. 2.

In particular, each target analysis comprises the following steps according to the left flow chart of Fig. 2:

- Step S101, referring to the quantitative description of the acquisition geometry, where this step will be explained in detail in section § 1.1 below;
- Step S102, referring to the determination of a response model, where this step will be explained in detail in section § 1.2 below;
- Step S103, referring to a response correction, where this step will be explained in detail in section § 1.4 below;
- Step S104, referring to a clutter suppression, where this step will be explained in detail in section § 1.5 below;
- Step S105, referring to the residual error analysis, where this step will be explained in detail in section § 1.6 below.

Furthermore, the target analysis comprises another step between step S102 and step S103. This step is only relevant in view of the efficient implementation of the method in practice in that it does not impact the results obtained and is described in detail in section § 1.3 below.

Each target analysis determines, from the SAR raw data $D_{pq}$, range compressed and clutter suppressed target data $F_{pq}^{s}$ (see equation (27) below) for each reference target s, where s is an index denoting a corresponding particular reference target. Furthermore, the target analysis results in a residual phase $\delta\phi_{pq}^{s}$ (see equation (34) below), a target coherence $W_{pq}^{s}$ (see equation (35) below), a residual delay $\tau_{pq}^{s}$ (see equation (38) below) and in an absolute RCS offset $\delta RCS_{pq}^{s}$ (see equation (39) below), where RCS refers to the radar cross section of the corresponding reference target. The above mentioned quantities, derived by the target analysis, represent measurements in the terminology of the claims. Those quantities are only indicated in step TA1 of Fig. 2 for the sake of clarity. The same quantities are also determined in the target analyses according to steps TA2, TA3, TA4 and TA5. Furthermore, in step S4, the additional measurement $\delta\phi_{pq,uv}^{s}$ representing the residual interferometric phase between two channels is derived (see equation (63) below).

Based on the result of the target analysis TA1, a residual range IRF calibration (IRF = Impulse Response Function) is performed as step S1. This step refers to the separate calibration procedure according to the terminology of the claims. A detailed description of this step is given in section § 2 below. The residual range IRF calibration results in a calibration factor $\Delta C_{e}$ for each antenna element e (see equation (47) below). After step S1, another target analysis TA2 is performed, where the calibration factor $\Delta C_{e}$ is taken into account in equation (24) below.

The result of the target analysis TA2 is processed in step S2 referring to the determination of antenna element mount angles. This step results in a calibration factor in the form of antenna element mount angle corrections $\Delta A_{e}$ for each antenna element e (see equation (48) below). A detailed description of this step is given in section § 3 below. Step S2 represents the first calibration procedure according to the terminology of the claims.

After step S2, another target analysis TA3 is performed, where the antenna element mount angle correction is taken into account in equation (16) below. The result of the target analysis TA3 is processed in step S3, which refers to the correction of antenna element lever arms. Step S3 results in the calibration factor $\Delta L_{e}$ for each antenna element e. Furthermore, a global correction to the speed of light, $\Delta_{c}$, is determined in step S3. This global correction accounts for tropospheric propagation effects. Step S3 is described in detail in section § 4 below and represents the second calibration procedure according to the terminology of the claims.

After step S3, the target analysis TA4 is performed, where the calibration factor $\Delta L_{e}$ is taken into account in equation (11) below and the tropospheric propagation correction $\Delta_{c}$ is taken into account in equation (14). The result of target analysis TA4 is used in step S4, which refers to an antenna element baseline calibration resulting in the calibration factor $\Delta L_{e}^{inf}$. In step S4, the additional measurement $\delta\phi_{pq,uv}^{s}$, as defined in equation (63) below, is used. Step S4 corresponds to the third calibration procedure in the terminology of the claims. Step S4 is described in detail in section § 5 below

The calibration factor $\Delta L_{e}^{inf}$ is added to the calibration factor $\Delta L_{e}$ determined in step S3, resulting in an updated and refined calibration factor $\Delta L_{e}$. Based on this new calibration factor, the target analysis TA5 is performed. The result of the target analysis TA5 is thereafter used to determine calibration constants according to step S5. Step S5 is described in detail in section § 6 below.

It is to be noted that, with respect to the above description, when a target analysis with a new calibration factor is carried out, other calibration factors determined in previous steps are also taken into account in the respective target analysis.

The method described herein results in calibration factors $\Delta C_e$, $\Delta A_e$, $\Delta L_e$ and $\Delta L_e^{inf}$ as well as in calibration constants. Those quantities can now be applied during the processing of new SAR data acquisitions of the radar sensor, thus resulting in calibrated SAR data and SAR images. The tropospheric propagation correction $\Delta_c$ is estimated to allow the unbiased estimation of $\Delta L_e$, but may not be useful in processing new acquisitions, as tropospheric conditions change with time.

In the following, steps S1 to S5 and S101 to S105 shown in Fig. 2 will be described in detail. At first, a definition of the notation and variables used is given in the following table:

| Symbol | Description | Units |
|---|---|---|
| $c$ | Speed of light | m/s |
| PRF | Overall Pulse Repetition Frequency for all acquired channels | Hz |
| $f_0$ | Centre frequency | Hz |
| $B$ | System bandwidth, symmetric about $f_0$ | Hz |
| PD | Pulse Duration | s |
| RSF | Range Sampling Frequency. | Hz |
| $t$, $t'$ | Pulse number (azimuth sample index) counting pulses in all data channels or only those in a particular channel, respectively | |
| $\tau$, $\tau'$ | Range sample index for the entire scene and relative to the expected range coordinate of a particular reference target, respectively | |
| $?_{pq}^s$ | A quantity derived from the response of reference target $s$ in a channel that uses antenna elements $p$ and $q$ to transmit and receive signals, respectively. | |
| $D_{pq}(t', \tau)$ | Raw measurement data acquired in channel $pq$ | |
| $C_{pq}(t', \tau)$ | Internal calibration data acquired for channel $pq$, obtained by recording pulses that have traversed the transmit- and receive-channels in the instrument. | |
| $D_{pq}^s(t', \tau')$ | Range-compressed response of a reference target, corrected for expected systematic variations | |
| $F_{pq}^s(t', \tau')$ | The range-compressed response $D_{pq}^s(t', \tau')$ after clutter suppression | |
| $r_{pq}^s(t')$ | The expected two-way distance from the sensor to the target and back | m |
| $los_e^s(t')$ | Unit length line-of-sight vector from antenna element $e$ to the reference target, in instrument coordinates | m |
| $\tau_{pq}^s(t')$ | The expected two-way signal propagation time from the sensor to the target and back | s |
| $\delta\phi_{pq}^s(t')$ | The residual phase error for the reference target, after compensating for expected systematic variations | rad |
| $w_{pq}^s(t')$ | The phase coherence of the reference target, which is close to 1 for a clean signal and decreases in the presence of noise | |
| $\delta\tau_{pq}^s(t')$ | The difference between the expected two-way propagation time $\tau_{pq}^s$ and that measured in the radar data | s |
| $\delta RCS_{pq}^s(t')$ | The difference between the expected and measured target RCS | dB |
| $\varepsilon_{opt}$ | A small, positive constant introduced for numerical stability during the minimisation of L1-norm errors. Set to $10^{-4}$ | |

(continued)

| Symbol | Description | Units |
|---|---|---|
| $\Delta C_e(f)$ | Complex, frequency dependent one-way response correction for antenna element $e$ | |
| $\Delta A_e$ | Antenna element mount angle correction *(roll,pitch,yaw)* | |
| $\Delta L_e$ | Antenna element lever arm correction in instrument coordinates | |
| $\Delta_c$ | Global correction to the speed of light to account for tropospheric propagation delays | |
| $\Delta RCS_e$ | One-way antenna element gain calibration constant | dB |
| $\Delta \tau_e$ | One-way antenna element delay calibration constant | s |
| $\Delta \phi_e$ | One-way antenna element phase calibration constant | rad |

For a given acquisition, the navigation sub-system on the satellite provides a sensor position

$$\mathrm{N(t)} \; = \; \begin{pmatrix} N_x(t) \\ N_y(t) \\ N_z(t) \end{pmatrix},$$ (1)

in terms of *(x,y,z)* coordinates in an arbitrary, global Cartesian coordinate system as a function of discrete time *t,* such that *t* corresponds to the $t^{th}$ radar pulse transmitted during the acquisition. These coordinates correspond to a specific point on the sensor platform, referred to as the instrument reference point in the following.
In addition, the navigation sub-system provides attitude angles

$$\mathrm{A(t)} \; = \; \begin{pmatrix} A_r(t) \\ A_p(t) \\ A_y(t) \end{pmatrix}.$$ (2)

The attitude angles measure the sensor roll (subscript *r*), pitch (subscript *p*) and yaw (subscript *y*) and relate the global *(x,y,z)* coordinate system to the so-called Cartesian instrument coordinate system. The latter has coordinate axes denoted *(u,v,w)* and is centred on the instrument reference point such that any particular point on the sensor has an instrument coordinate that is constant over time. Using these definitions, the time dependent transformation from instrument coordinates *(u,v,w)* to global coordinates *(x,y,z)* at a particular instant in time *t* can be defined as

$$\begin{pmatrix} x \\ y \\ z \end{pmatrix} \; = \; \mathrm{G}\left( \begin{pmatrix} u \\ v \\ w \end{pmatrix}, t \right) = \; \mathbf{R}(\mathrm{A(t)}) \begin{pmatrix} u \\ v \\ w \end{pmatrix} + \mathrm{N}(t).$$ (3)

where R(t) is a 3x3 rotation matrix derived from the attitude angles A(t). The precise definition of the rotation depends on the conventions adopted for the coordinate systems and attitude angles. The inverse of this transformation is given by:

$$\begin{pmatrix} u \\ v \\ w \end{pmatrix} \; = \; \mathrm{G}^{-1}\left( \begin{pmatrix} x \\ y \\ z \end{pmatrix}, t \right) = \; \mathbf{R}\big(\mathrm{A(t)}\big)^{-1} \left( \begin{pmatrix} x \\ y \\ z \end{pmatrix} - \mathrm{N}(t) \right).$$ (4)

In addition, the calibration of element mount angles uses a modified inverse transformation

$$\begin{pmatrix} u \\ v \\ w \end{pmatrix} = G^{-1}\left(\begin{pmatrix} x \\ y \\ z \end{pmatrix}, \Delta A, t\right) = R(\Delta A)^{-1}\, R(A(t))^{-1}\left(\begin{pmatrix} x \\ y \\ z \end{pmatrix} - N(t)\right), \qquad (5)$$

in which an additional, constant roll, pitch and yaw correction ∆A is applied to the sensor attitude angles for the rotation from the instrument into the antenna element coordinate system.

The SAR instrument (i.e. the radar sensor) under consideration uses an antenna array with E individual elements in an arbitrary spatial arrangement. In a polarimetric SAR sensor, each element may transmit and receive signals in horizontal (H) or vertical (V) polarisation. For the present purposes, the two modes of operation (H or V) are treated as two distinct elements, such that the *E* elements of the array actually correspond to *E/2* physical elements with two polarisation settings each. The on-ground characterisation of the antenna array provides the following information concerning each particular element e of the array:

- **Lever arm $L_e$** : The coordinates of the antenna phase centre as measured in the instrument coordinate system *(u,v,w)*.
- **Complex antenna gain diagram $A_e$ (α, β, f):** A diagram describing the amplification and phase shift affecting a signal transmitted or received through the antenna element in a particular propagation direction at a particular frequency. The three dimensions α, β and *f* denote the off-nadir angle, the squint angle and the frequency, respectively. The propagation direction, parameterised by angles α and β, is defined in terms of the instrument coordinate system. The propagation direction towards a point *P* measured relative to the element phase centre in the instrument coordinate system is given by the mappings

$$\alpha_e\,(P) = a\left(\frac{P}{|P|}\right) \qquad\qquad (6)$$

$$\beta_e\,(P) = b\left(\frac{P}{|P|}\right) \qquad\qquad (7)$$

where the definitions of a and b depend on the coordinate and angle conventions adopted.

The radar sensor provides multiple channels of complex SAR raw data $D_{pq}\,(t', \tau)$ as well as the corresponding internal calibration measurements $C_{pq}\,(t', \tau)$. The subscript *pq* identifies the data channel by the particular combination antenna array elements employed to transmit pulses (element *p*) and receive echoes (element *q*). In the present approach, SAR data acquired for calibration purposes always use individual antenna elements on transmit and receive, as the use of multiple elements would imply beam-forming, which in turn requires accurate array calibration to already have been carried out. The dimensions of the raw data are *t'*, which is related to the discrete time *t* defined above, and $\tau$, the so-called fast time, which measures the comparatively short duration between pulse transmission the time at which a particular raw data sample is received and recorded. In the following, *t'* and $\tau$ denote sample indices that can, however, be easily converted to physical units. The distinction between *t* and *t'* arises because, in practice, the particular transmit/receive element combination *pq* is interleaved with other combinations in a pulse sequence. Assuming a regular pulse sequence that repeats itself after *L* pulses results in the simple relationship

$$t[t'] = o_{pq} + L\, t'. \qquad\qquad (8)$$

where $o_{pq}$ denotes the offset of a particular transmit/receive combination within the sequence. The internal calibration data $C_{pq}(t', \tau)$ characterises propagation effects in the radar by providing a record of the transmitted pulse that has bypassed the antenna and was fed back directly into the receive path. Ideally, calibration pulses are recorded on a pulse-to-pulse basis using the actual signal pathways employed for the particular transmit and receive element combination. In practice, the calibration data may not be acquired for each pulse, such that it needs to be interpolated in time, or may not cover every transmit/receive combination, in which case the same calibration data must be re-used for several pulses in the sequence.

Sensor calibration data takes are acquired over test-sites with dedicated reference targets. The relevant properties of these targets must be measured to a high degree of accuracy to allow for a meaningful comparison between the expected radar return and the actual SAR measurements. The relevant properties for a given reference target s are:

- **Target Position $T^s$:** Coordinates of the phase centre of the target in the global (x,y,z) coordinate system. The reference targets used are assumed to be very close to ideal point scatterers, such that the phase centre position remains constant as a function of illumination direction, frequency and polarisation.

- **Target RCS** $R^s_{\{HH,HV,VH,VV\}}(\theta, \phi, f)$ : The scattering amplitude (i.e. the square root of the radar cross section in $m$) of the target s in all transmit/receive polarisation combinations as a function of propagation direction ($\theta, \phi$) and frequency $f$. This amplitude may be complex, with the scattering phase describing movements of the target phase centre as a function of propagation direction and frequency, if the target cannot be considered an ideal point-like scatterer. The propagation direction from a given reference target towards a point P in global coordinates, where, as before, the details depend on the coordinate conventions adopted, is derived from the mappings

$$\theta^s(P) = \Theta\left(\frac{P - T^s}{|P - T^s|}\right) \text{ and} \tag{9}$$

$$\phi^s(P) = \Phi\left(\frac{P - T^s}{|P - T^s|}\right). \tag{10}$$

### § 1 Reference Target Analysis

The analysis of reference targets in the acquired calibration SAR data is the central building block of the calibration approach. The analysis comprises the selection and pre-processing of relevant parts of the input data and the subsequent extraction of information necessary for estimating calibration corrections. It is repeated for each valid reference target s in each SAR data channel *pq* acquired, where valid targets are those that can be expected to produce a response in the channel under consideration. Analysis does not, therefore, cover targets that are misaligned or do not produce a response for the transmit and receive antenna element polarisations in a particular SAR data channel.

### § 1.1 Acquisition Geometry

The process begins with pre-processing the navigation data. First, the position of transmit and receive phase centres for each pulse of the raw data channel in global coordinates are obtained from equations (3) and (8) as

$$N_{e \in \{p,q\}}(t') = G(L_e + \Delta L_e, \mathrm{t}[t']), \tag{11}$$

where $\Delta L_p$ and $\Delta L_q$ denote lever arm corrections, in the instrument coordinate system, for the *p* and *q* antenna elements, respectively. These are initially zero but take non-zero values when reference target analysis is repeated later on in the calibration process.

Given the phase centre positions, the following relevant spatial relationships between the sensor and the reference target during data acquisition are derived:

$$r^s_{pq}(t') = \sum_{e \in \{p,q\}} |T^s - N_e(t')| \text{ and} \tag{12}$$

$$los^s_{e \in \{p,q\}}(t') = \frac{G^{-1}(T^s, t[t']) - G^{-1}(N_e(t'), t[t'])}{|G^{-1}(T^s, t[t']) - G^{-1}(N_e(t'), t[t'])|}, \tag{13}$$

where $r^s_{pq}$ is the time-variant two-way range distance from sensor to target and $los^s_{e \in \{p,q\}}$ are unitary line-of-sight vectors in instrument coordinates. The range distance can be converted to the equivalent two-way travel time from sensor to target and back as follows:

$$\tau^s_{pq}(t') = \frac{r^s_{pq}(t')}{(1 + \Delta_c)c}, \tag{14}$$

where $\Delta_c$ is a multiplicative correction applied to the speed of light to account for propagation delays in the troposphere. This correction is initially zero but takes a non-zero value when reference target analysis is repeated later on in the calibration process.

It should be noted that, in contrast to other calibration corrections estimated, the tropospheric propagation correction $\Delta_c$ is specific to the calibration acquisition under consideration and is not transferrable to other data takes. This is due to the fact that tropospheric conditions may change in time and, in the spaceborne case, the thickness of the troposphere between the reference target and the sensor changes depending on the altitude of the reference target (note that the form of the correction in eq. (14) assumes that all reference targets in a single calibration acquisition are at roughly the same altitude). The correction is nevertheless important, as it removes tropospheric bias from other corrections, such as the antenna lever arms and the residual range delays, which are then transferred to other data takes.

## § 1.2 Antenna Gain and Target Return / Response Model

The expected brightness of a given reference target in the SAR data acquired depends on the antenna element illumination in the direction of the target as a function of time as well as on the intrinsic brightness of the target.

The time dependent antenna gain is obtained by first transforming the reference target position $T^s$ into antenna element coordinates relative to the respective antenna element phase centre using the modified transform of equation (5):

$$T_{e\in\{p,q\}}^{s}(t',\Delta A_{e}) = \ G^{-1}(T^{s},\Delta A_{e},t[t']) - \ G^{-1}(N_{e}(t'),\Delta A_{e},t[t']), \qquad (15)$$

where $\Delta A_{e\in\{p,q\}}$ denote the antenna element mount angles for elements p and q, respectively. These are initially zero but take non-zero values when reference target analysis is repeated later on in the calibration process.

The time and frequency dependent two-way gain towards the reference target can then be obtained in using the mappings of equations (6) and (7)

$$A_{pq}^{s}(t',f) = \ \prod_{e\in\{p,q\}}A_{e}(\alpha_{e}\ (T_{e}^{s}(t',\Delta A_{e})),\beta_{e}\ (T_{e}^{s}(t',\Delta A_{e})),f). \qquad (16)$$

Similarly, the intrinsic brightness of the reference target as a function of frequency and time is obtained from the target RCS by applying equations (9) and (10) to the element phase centre positions in global coordinates:

$$R_{pq}^{s}(t',f) = \ R_{Pol[p]Pol[q]}^{s}\big(\theta^{\ s}\ \big(N_{pq}(t')\big),\phi^{s}\ \big(N_{pq}(t')\big),f\big), \qquad (17)$$

where $Pol[e]$ denotes the polarisation of antenna element e and the monostatic approximation $N_{pq}(t') = \frac{1}{2}\big(N_{p}(t') + N_{q}(t')\big)$ has been used. In cases where this monostatic approximation breaks down, because the propagation direction from sensor to target is differs significantly between the transmit and receive paths, it is necessary to use more complicated RCS models that explicitly take into account both propagation directions and would thus be parameterised in terms of four angles instead of two.

## § 1.3 Data Limits

The radar returns of a single reference target in a single data channel occupy a small fraction of the total raw data constituting the calibration data acquisition. The first step of radar data analysis is therefore to determine the extent of the raw data to be analysed for a single target in a single channel. The aim of this section is to define a mask

$$M(t',\tau) = \ M_{az}(t')\ M_{rg}(t',\tau) = \begin{cases} 1 \text{ for relevant raw data samples} \\ \qquad 0 \text{ otherwise} \end{cases}, \quad (18)$$

where $s,p$ and $q$ have been dropped for notational brevity.

In azimuth, i.e. time $t'$, the analysis limits must include at least those samples that cover the relevant portion of the antenna beam, i.e. the part that will be used in operational imaging modes. Mission planning is therefore expected to provide a mask

$$M_{Ant}(\alpha,\beta) = \begin{cases} 1 \text{ for relevant propagation directions } (\alpha,\beta) \\ \qquad 0 \text{ otherwise} \end{cases}, \qquad (19)$$

which can then be used to derive $M_{az}(t')$ as follows:

$$M_{az}(t') = \ \prod_{e\in\{p,q\}}M_{Ant}(\alpha_{e}\ (T_{e}^{s}(t')),\beta_{e}\ (T_{e}^{s}(t'))). \qquad (20)$$

The mask in range direction, $M_{rg}(t', \tau)$, includes the samples required for pulse compression (for a given pulse duration *PD*) at each azimuth time *t'* and a constant margin $\tau_{marg}$ to account for residual range delays. It also accounts for internal delays within the radar instrument, $\delta\tau_{pq}(t')$.

$$M_{rg}(t',\tau) = \begin{cases} 1 \text{ if } -\frac{PD}{2} < \tau - \left(\tau_{pq}^s(t') + \delta\tau_{pq}(t')\right) < \frac{PD}{2} + \tau_{marg} \\ 0 \text{ otherwise} \end{cases}. \qquad (21)$$

The instrument delay term is composed of the delay measurement that is part of the internal calibration data and an external calibration delay measurement.

$$\delta\tau_{pq}(t') = \Delta\tau_p + \Delta\tau_q + \Delta\tau_{pq}^{int}(t'), \qquad (22)$$

where $\Delta\tau_{pq}^{int}(t')$ is the two-way propagation delay that can be derived from the internal calibration signal $C_{pq}(t', \tau)$ and $\Delta\tau_{e \in \{p,q\}}$ denote residual one-way propagation delays through the respective antenna elements that are not captured by internal calibration measurements. The latter are initially zero but take non-zero values when reference target analysis is repeated later on in the calibration process.

## § 1.4 Pulse Compression and Response Correction

Once the relevant data limits are known, the corresponding data from the SAR raw data channel are read, compressed in range and corrected for known properties of the antenna element patterns, the expected reference target response, residual instrument delays and the propagation time from the antenna element phase centre to the target and back:

$$D_{pq}^s(t',\tau') = IFFT_{f \to \tau'}\left[\frac{FFT_{\tau \to f}[D_{pq}^s(t',\tau)]\, r_{pq}^s(t')^2}{C(t',f)A_{pq}^s(t',f)\, R_{pq}^s(t',f)}\, e^{j\phi(t')}\right], \qquad (23)$$

where *FFT* and *IFFT* denote the forward and inverse Fourier transform, respectively, j is the complex root of -1, *f* denotes a sample index rather than a physical frequency and

$$C(t',f) = FFT_{\tau \to f}\left[C_{pq}(t',\tau)\right]\Delta C_p(f)\,\Delta C_q(f), \qquad (24)$$

$$\phi(t') = 2\pi\, F[f]\left(\tau_{pq}^s(t') + \sum_{e \in \{p,q\}}\Delta\tau_e\right). \qquad (25)$$

In eq. (25), the mapping *F[f]* converts the frequency sample index *f* into a physical frequency measured in Hz, taking into account the centre frequency $f_0$ and the range sampling frequency *RSF*.

The calibration corrections $\Delta C_{e \in \{p,q\}}(f)$ and $\Delta\tau_{e \in \{p,q\}}$ denote residual corrections to the one-way frequency response and the one-way propagation delay of antenna elements *p* and *q*. They are initially 1 (for $\Delta C_{e \in \{p,q\}}$) and 0 (for $\Delta\tau_{e \in \{p,q\}}$) but take different values when reference target analysis is repeated later on in the calibration process.

The application of eq. (23) has several simultaneous effects on the input raw data $D_{pq}(t', \tau)$:

- **Range Compression:** by effectively correlating the input raw data with the reference transfer function *C*.

- **Amplitude Flattening:** by removing systematic, azimuth and frequency dependent amplitude variations due to the antenna gain $A_{pq}^s$, the expected target response $R_{pq}^s$ and the two-way inverse square amplitude decay $r_{pq}^s(t')^2$.

- **Phase Flattening:** by removing the expected phase variation due to the azimuth-variant propagation time from the sensor to the reference target and back as part of the phase correction $\phi$. Importantly, this correction removes aliasing from the target response, such that analyses that follow are not biased by ambiguities, even when the input data are under-sampled in azimuth. Also note that frequency and propagation direction dependent variations of the antenna phase centre are compensated for by the phase of $A_{pq}^s$ (the same applies to the reference target phase centre if $R_{pq}^s$ is complex).

• **Range Cell Migration and Delay Correction:** by including delay terms $\Delta\tau_{e\in\{p,q\}}$ in the phase correction $\phi$ and making it frequency dependent.

The output data $D_{pq}^s(t',\tau')$ is expected to contain the response of the reference target at $\tau' = 0$ for all $t'$, and both the amplitude and the phase of the response are expected to be constant. Any deviation from this expectation corresponds to a miss-calibration of the sensor that is to be corrected by introducing appropriate calibration refinements.

The description in this section has, in the interest of clarity, not made reference to the sample mask of eq. (18). An actual implementation would use the mask to significantly increase computational efficiency by only processing the relevant samples for the data channel and reference target under consideration.

The result of the radar raw data pre-processing is a data buffer $D_{pq}^s(t',\tau')$ that includes range compressed data for azimuth times t' at which $M_{az}(t') = 1$ and a small fast-time interval $|\tau'| < \tau_{marg}$.

## § 1.5 Azimuth Bandpass Filter for Clutter Suppression

The range compressed raw data $D_{pq}^s(t',\tau')$ contains, in addition to the reference target response, unwanted contributions from other targets elsewhere in the imaged scene. This "clutter" contribution needs to be suppressed as far as possible before the target response can be meaningfully analysed.

Clutter filtering begins with a Fourier transformation in azimuth to obtain

$$D_{pq}^s(f_{az},\tau') = FFT_{t'\to f_{az}}\big[D_{pq}^s(t',\tau')\big], \tag{26}$$

where $D_{pq}^s$ has been zero-padded in t' from $N_{az}$ to $N'_{az}$ samples before the transformation to avoid artefacts at the response edges due to the subsequent filtering operation.

This transformation is essentially equivalent to performing an azimuth compression of the reference target response where, because the phase has been flattened in the application of eq. (23), ambiguities in the target response due to azimuth under-sampling of the raw data channel no longer occur. In $D_{pq}^s(f_{az},\tau')$, the reference target energy is focussed into a small number of samples around $f_{az} = 0$, where deviations from 0 indicate an error in the assumed antenna element phase centre positions in the sensor flight direction.

Clutter suppression is achieved by damping energy contributions outside a small region around the compressed reference target using a Gaussian kernel $K(f_{az})$ to obtain the filtered data $F_{pq}^s(t',\tau')$

$$F_{pq}^s(t',\tau') = IFFT_{f_{az}\to t'}\big[K(f_{az})\,D_{pq}^s(f_{az},\tau')\big]/Z(t'), \tag{27}$$

where

$$K(f_{az}) = e^{-\frac{(f_{az}-\mu)^2}{2\,\sigma^2}} \tag{28}$$

and $Z(t')$ compensates for the systematic amplitude decrease introduced by the filter at the edges of the response. It is obtained by convolving a zero-padded vector of $N_{az}$ ones with the Gaussian kernel corresponding to eq. (28). Padded samples are removed from $F_{pq}^s$ after filtering.

The Gaussian is centred about the maximum target response $\mu$, determined within a range of permissible frequencies $-f_{max} < f_{az} < f_{max}$:

$$\mu = \text{argmax}_{-f_{max}<f_{az}<f_{max}}\Big[\textstyle\sum_{\tau'}\big|D_{pq}^s(f_{az},\tau')\big|^2\Big], \tag{29}$$

where the limit $f_{max}$ is determined from a liberal estimate of the largest realistically to be expected residual element phase centre position error $\delta L_{max}$ by the relation

$$f_{max} = \delta L_{max} \frac{f_0}{(1+\Delta_c)c} \sum_{e \in \{p,q\}} |los_e^s(0) - los_e^s(N_{az} - 1)|. \tag{30}$$

The standard deviation $\sigma$ of the Gaussian filter is chosen to maximise clutter suppression while preserving features of the response down to the angular resolution in azimuth required for the accurate estimation of calibration corrections.

The angular resolution is defined in terms of the effective squint angle

$$\beta(t') = \arccos\left(\frac{\min\left(r_{pq}^s(t')\right)}{r_{pq}^s(t')}\right). \tag{31}$$

The filter width then follows from the required angular resolution $\delta\beta$, which is typically set to a value on the order of 0.1 degrees:

$$\sigma = \frac{\max\left(\beta(t')\right) - \min\left(\beta(t')\right)}{\delta\beta}. \tag{32}$$

Finally, accurate radiometric calibration requires an estimate of the clutter energy remaining in the reference target response after filtering. The average clutter energy per bin in the azimuth frequency domain is robustly estimated as the median intensity between two and three standard deviations offset from the peak response. The corresponding average clutter energy per sample in the azimuth time domain is then obtained by taking into account the kernel support as follows:

$$\text{Clutter}_{pq}^s = \\ \text{median}_{2\sigma < |f_{az} - \mu| < 3\sigma}\left(\sum_{\tau'}\left|D_{pq}^s(f_{az}, \tau')\right|^2\right)\frac{N_{az}'\left(\sum_{f_{az}} K(f_{az})^2\right)}{N_{az}}. \tag{33}$$

Equation (33) assumes that the *FFT* and *IFFT* operations follow the generally accepted convention by using scaling factors of 1 and $1/N_{az}'$, respectively.

The amount of residual clutter energy is of central importance to the approach as a whole, as it quantifies the amount of noise that ultimately limits the accuracy of the calibration corrections derived. In this context, it should be pointed out that while the phase correction of eq. (25) ensures that azimuth under-sampling is not an issue for the reference target response itself, such under-sampling will increase the residual clutter energy due to aliased clutter contributions.

### § 1.6 Residual Phase, Coherence, Delay and RCS Mismatch

The clutter filtered, range compressed raw data $F_{pq}^s$ is used to derive several vector quantities to be used later in the calibration process.

The **residual phase** measures phase errors in the target response that are related to inaccuracies in the navigation data and the antenna element lever arms.

$$\delta\phi_{pq}^s(t') = \arg\left(\sum_{\tau'} F_{pq}^s(t', \tau')\right). \tag{34}$$

The **target coherence** is used to quantify the reliability of the measurement as a function of azimuth time. It is close to one for clean portions of the target response and decreases towards zero where the response is perturbed by residual clutter, system noise or radio frequency interference. It is denoted *w*, as it is principally used as a weight when deriving calibration corrections, and is defined as

$$w_{pq}^s(t') = \left|e^{j\,\delta\phi_{pq}^s(t')} \otimes \boldsymbol{B}\right|, \tag{35}$$

where **B** is a low-pass filter that is narrow enough to provide an unbiased coherence estimate. The convolution may, for example, correspond to a moving average with on the order of 100 samples.

The **residual delay** measures the offset of the target response from the expected range at $\tau' = 0$. It is estimated in a two-step procedure beginning with localising the maximum response with sample accuracy.

$$\delta\tau_{coarse}(t') = \text{argmax}_{\tau'}\left[\left|F_{pq}^s(t',\tau')\right|\right] \tag{36}$$

A sub-sample refinement to the initial, coarse estimate is obtained by estimating a phase gradient in the frequency domain. Assuming that the filtered data has $N_{rg}$ samples in the range dimension (corresponding to $\tau'$), the residual target offset can be derived as

$$\delta\tau_{fine}(t') =$$

$$\frac{1}{\pi}\arg\left(\sum_{f=-\frac{N_{rg}}{2}}^{-1} F_{pq}^s\left(t', f + \frac{N_{rg}}{2}\right) F_{pq}^s(t', f)^* e^{-\pi j\,\delta\tau_{coarse}(t')}\right), \tag{37}$$

where $F_{pq}^s(t', f) = FFT_{\tau\to f}\left[F_{pq}^s(t', \tau)\right]$ and the superscript * denotes complex conjugation. The combined residual offset in seconds is then given by

$$\delta\tau_{pq}^s(t') = \frac{(\delta\tau_{coarse} + \delta\tau_{fine})}{RSF}. \tag{38}$$

The analysis of the filtered raw data with respect to the radar cross section aims to derive the absolute, unit-less offset, in dB, between the expected and the measured RCS of the reference target. Although equation (23) has already accounted for systematic intensity variations due to antenna element gains and the expected target RCS, the derivation of the **absolute RCS offset** from the filtered data must also include additional terms from the radar equation for real-aperture radar and compensate for the residual clutter intensity of eq. (33) as follows:

$$\delta RCS_{pq}^s(t') = 10\log_{10}\frac{16\,\pi^2}{\lambda^2\,G_{aux}}\left(\left(\sum_{\tau'}\left|F_{pq}^s(t', \tau')\right|^2\right) - \text{Clutter}_{pq}^s\right), \tag{39}$$

where $\lambda = (1 + \Delta_c)c/f_0$ denotes the wavelength and the term $G_{aux}$ collects constant system gain terms that were not included in the corrections of eq. (23). Examples of the latter include the gain due to analog-to-digital conversion and the damping usually applied to only the internal calibration signals (but not to the actual SAR imaging data).

### § 2 Residual Range Impulse Response Calibration

The aim of the residual range impulse response calibration is to measure systematic, frequency dependent amplitude and non-linear phase variations that occur within the pulse bandwidth when internal calibration measurements fail to faithfully reproduce the transfer function of the radar instrument. Corresponding corrections are estimated for each individual antenna element and are assumed to be reciprocal, i.e. identical on transmit and receive.

Estimation begins with pre-processing the filtered raw data to remove constant offsets in gain, residual delay, phase and amplitude as follows:

$$H_{pq}^s(t', f) = FFT_{\tau\to f}\left[\frac{F_{pq}^s(t', \tau')}{\sum_{\tau'} F_{pq}^s(t', \tau')}\right] e^{-2\pi j\,F[f]\,\delta\tau_{pq}^s(t')/N_{rg}}, \tag{40}$$

where, as above, $N_{rg}$ denotes the number of samples in range and $F[f]$ maps the frequency index $f$ to a physical frequency in Hz. $H_{pq}^s$ represents the normalised frequency response of the target at each azimuth time $t'$, in which the overall energy is unity and linear phase ramps over frequency $f$ have been removed by compensating for propagation time variations $\delta\tau_{pq}^s$.

Corrections in terms of gain, in dB, and phase are estimated separately. Each antenna element e is thereby

associated with corrections $\Delta C_e^{gain}(f)$ and $\Delta C_e^{phase}(f)$ that minimise errors of the form

$$E_{pq}^{s,gain}(t',f) = w_{pq}^s(t') \left| 20\log_{10}\left|H_{pq}^s(t',f)\right| - \sum_{e\in\{p,q\}}\Delta C_e^{gain}(f)\right| \quad (41)$$

$$E_{pq}^{s,phase}(t',f) = w_{pq}^s(t') \left| \arg\left(H_{pq}^s(t',f)\right) - \sum_{e\in\{p,q\}}\Delta C_e^{phase}(f)\right|, \quad (42)$$

where the coherence of eq. (35) is used to increase the impact of reliable measurements on the estimated corrections. By setting each of the above error terms to zero, the above relations lead to over-determined systems of equations with one equation for each azimuth sample $t'$, frequency $f$, channel combination $pq$ and reference target s.

The error functions defined above use the L1-norm, rather than quadratic errors, to reduce the impact of outliers on the solution. The L1-error minimisation is carried out using an iteratively re-weighted least squares approach applied to linear equations of the form

$$W_{pq}^{s,gain}(t',f)\left(20\log_{10}\left|H_{pq}^s(t',f)\right| - \sum_{e\in\{p,q\}}\Delta C_e^{gain}(f)\right) = 0 \quad (43)$$

$$W_{pq}^{s,phase}(t',f)\left(\arg\left(H_{pq}^s(t',f)\right) - \sum_{e\in\{p,q\}}\Delta C_e^{phase}(f)\right) = 0, \quad (44)$$

Given a set of current correction estimates $\Delta C_e^{gain}(f)$ and $\Delta C_e^{phase}(f)$, both initially zero, the error minimisation proceeds by deriving updated weights

$$W_{pq}^{s,gain}(t',f) = \frac{w_{pq}^s(t')}{\sqrt{E_{pq}^{s,gain}(t',f)+\epsilon_{opt}}} \quad (45)$$

$$W_{pq}^{s,phase}(t',f) = \frac{w_{pq}^s(t')}{\sqrt{E_{pq}^{s,phase}(t',f)+\epsilon_{opt}}} \quad (46)$$

and solving the systems of equations implied by (43) and (44) using standard least-squares techniques to obtain updated corrections that are less affected by outliers. The small, positive number $\varepsilon_{opt}$ is introduced for numerical stability only; it is set to 10⁻⁴.

Upon convergence, the complex valued response correction for an antenna element e is given by

$$\Delta C_e(f) = 10^{\frac{\Delta C_e^{gain}}{20}}e^{j\Delta C_e^{phase}}. \quad (47)$$

After residual range frequency response corrections have been obtained, the reference target analysis of section § 1 is repeated, where these corrections are taken into account in eq. (24), before further calibration corrections are derived.

### § 3 Antenna Element Mount Angle Calibration

The aim of the element mount angle estimation is to derive optimal roll/pitch/yaw corrections

$$\Delta A_e = \begin{pmatrix} \Delta roll_e \\ \Delta picth_e \\ \Delta yaw_e \end{pmatrix} \quad (48)$$

to be applied when transforming global coordinates into the antenna coordinate system in eq. (5). The approach taken is to choose the attitude corrections that minimise variations in the RCS offsets $\delta RCS_{pq}^{s}$ of eq. (39). The corresponding error function takes the form

$$E_{pq}^{s,\Delta A}(t') = w_{pq}^{s}(t') \left| \delta RCS_{pq}^{s}(t') - \sum_{e \in \{p,q\}} \Delta Gain_{e}^{s}(t', \Delta A_{e}) + \Delta RCS_{e} \right| \tag{49}$$

where $\Delta RCS_{e}$ is the unknown constant gain offset, in dB and assumed reciprocal, affecting the signal after propagating through antenna element e, and $\Delta Gain_{e}^{s}(t', \Delta A_{e})$ denotes the change in the antenna gain, in dB and at the centre frequency, due to mount angles $\Delta A_{e}$ at each azimuth position $t'$. The definition of the latter closely follows that of the two-way complex antenna gain in eq. (16):

$$\Delta Gain_{e}^{s}(t', \Delta A_{e}) = Gain_{e}^{s}(t', \Delta A_{e}) - Gain_{e}^{s}(t', \mathbf{0}) \tag{50}$$

with

$$Gain_{e}^{s}(t', \Delta A_{e}) = 20 \log_{10} \left| A_{e}(\alpha_{e} \left( T_{e}^{s}(t', \Delta A_{e}) \right), \beta_{e} \left( T_{e}^{s}(t', \Delta A_{e}) \right), f_{0}) \right| \tag{51}$$

As before, the optimisation uses a L1-error function to reduce the impact of outliers and needs to be carried by iteratively solving re-weighted least-squares problems. The minimisation of errors of the form (49) is complicated, however, by the non-linearity of eq. (51) in terms of attitude corrections $\Delta A_{e}$. The first step is therefore to derive a linear approximation of $Gain_{e}^{s}$ that is valid close to a given value of $\Delta A_{e}$:

$$Gain_{e}^{s}(t', \Delta A_{e} + \epsilon_{e}) \approx Gain_{e}^{s}(t', \Delta A_{e}) + \begin{pmatrix} g_{e}^{s,roll}(t') \\ g_{e}^{s,pitch}(t') \\ g_{e}^{s,yaw}(t') \end{pmatrix} \cdot \begin{pmatrix} \epsilon_{e}^{roll} \\ \epsilon_{e}^{pitch} \\ \epsilon_{e}^{yaw} \end{pmatrix}. \tag{52}$$

The local gradients $\left\{ g_{e}^{s,roll}, g_{e}^{s,pitch}, g_{e}^{s,yaw} \right\}$ are computed numerically from the changes in $Gain_{e}^{s}$ when $\Delta A_{e}$ is perturbed in the respective angular dimension.

The determination of antenna element mount angles is then carried out as a fixed point iteration. Each iteration solves an over-determined system of equations of the form

$$W_{pq}^{s,\Delta A}(t') \left( \delta RCS_{pq}^{s}(t') - \sum_{e \in \{p,q\}} \Delta Gain_{e}^{s}(t', \Delta A_{e}) + \begin{pmatrix} g_{e}^{s,roll}(t') \\ g_{e}^{s,pitch}(t') \\ g_{e}^{s,yaw}(t') \end{pmatrix} \cdot \begin{pmatrix} \epsilon_{e}^{roll} \\ \epsilon_{e}^{pitch} \\ \epsilon_{e}^{yaw} \end{pmatrix} + \Delta RCS_{e} \right) = 0 \tag{53}$$

for the constants $\Delta RCS_{e}$ and the incremental corrections $\varepsilon_{e}$ to the element mount angles. The system consists of one equation for each azimuth sample $t'$ of each raw data channel $pq$ and each reference target s and is solved using standard least-squares approaches.

The iteration accomplishes the robust L1-norm minimisation implied by the form of the error function in eq. (49) by updating the weights

$$W_{pq}^{s,\Delta A}(t') = \frac{w_{pq}^{s}(t')}{\sqrt{E_{pq}^{s,\Delta A}(t') + \epsilon_{opt}}} \tag{54}$$

on the basis of the current estimates of $\Delta RCS_e$ and $\Delta A_e$ before each iteration. After each iteration, the corrections $\varepsilon_e$ are applied additively to the current $\Delta A_e$ and the functions $\Delta Gain_e^s$ and numerical gradients $\{g_e^{s,roll}, g_e^{s,pitch}, g_e^{s,yaw}\}$ are updated ac-cordingly.

The iteration terminates once the antenna element mount angles have converged. The reference target analysis described in section § 1 is then repeated, where the estimated mount angle corrections are taken into account in eq. (16), before proceeding with further calibration steps.

For polarimetric SAR sensors, the above procedure must be modified to ensure that a single physical antenna element is associated with only one mount angle, instead of separate mount angles for the H and V polarisations. This is achieved by simply reducing the number of unknowns by symbolically setting $\Delta A_p \triangleq \Delta A_q$ for pairs of logical elements *p* and *q* that correspond to the same physical antenna element.

### § 4 Coarse Antenna Element Phase Centre Position Calibration

The positions of the antenna element phase centres, as parameterised by the corresponding lever arms, are refined in two steps. The first step, described in this section, derives relatively coarse positions that are accurate to within the limits set by residual errors affecting the input navigation data and the assumed reference target positions. This coarse estimate also accounts for a residual tropospheric propagation delay, modelled as a correction to the speed of light.

The optimisation process uses two error functions that essentially separate the effects of element lever arm related errors into the range and azimuth dimensions. The first error function relates the lever arm corrections to the measured range position offsets of reference targets:

$$E_{pq}^{s,\mathrm{rg}} = \left| \sum_{t'} w_{pq}^{s}(t') \left( (1 + \Delta_c) c \left( \delta\tau_{pq}^{s}(t') + \left( 1 - \frac{1}{1+\Delta_c} \right) \tau_{pq}^{s}(t') \right) - \right.\right.$$
$$\left.\left. \delta los_{pq}^{s}(t') - \sum_{e \in \{p,q\}} \Delta r_e \right) \right| \tag{55}$$

where

$$\delta los_{pq}^{s}(t') = \sum_{e \in \{p,q\}} los_e^{s}(t') \cdot \Delta L_e. \tag{56}$$

This error function aims to explain the observed reference target range offsets $\delta\tau_{pq}^{s}$ of eq. (38) in terms of the projection of lever arm refinements $\Delta L_e$ onto the line-of-sight vectors $los_e^{s}$ of eq. (13) in combination with a tropospheric propagation correction $\Delta_c$ and residual element propagation delays $\Delta r_e$, measured in metres rather than seconds to avoid introducing a non-linearity. $\Delta L_e$, $\Delta_c$ and $\Delta r_e$ are considered unknown variables, and the range position error is summed over azimuth time *t'* using the target coherence $w_{pq}^{s}$ of eq. (35) as a weight to yield a single error term for each data channel *pq* and reference target *s.*

The impact of residual element lever arm errors and the tropospheric propagation delay as a function of azimuth time *t'* is captured by a second error function based on the residual phase $\delta\phi_{pq}^{s}$ of eq. (34). This phase measurement is considerably more sensitive than the residual delay $\delta\tau_{pq}^{s}$ used above but can only capture relative errors within the illumination time due to the presence of unavoidable, hardware related constant phase offsets.

$$E_{pq}^{s,\text{az}}(t') = w_{pq}^s(t') \left| \frac{(1+\Delta_c)c}{2\pi f_0} \left( \delta\phi_{pq}^{s,UW}(t') + \left( \frac{1}{1+\Delta_c} - 1 \right) \frac{2\pi f_0 \, r_{pq}^s(t')}{c} \right) + \right.$$
$$\left. \delta los_{pq}^s(t') - O_{pq}^s \right|, \tag{57}$$

where $\delta\phi_{pq}^{s,UW}(t')$ is the result of unwrapping the residual phase $\delta\phi_{pq}^s$ along azimuth. To minimise the estimation bias introduced by potential phase unwrapping errors, the azimuth dependent analysis is restricted to the largest contiguous set of samples for which the coherence $w_{pq}^s$ exceeds a certain threshold (e.g. 0.85).

The azimuth error function is similar to that of eq. (55) and penalises residual phase variations that can be reduced by introducing appropriate lever arm and tropospheric propagation corrections. The variable $O_{pq}^s$, treated as an unknown specific to each channel *pq* and reference target *s,* can be considered an auxiliary variable that absorbs offsets due to residual propagation delays in the sensor as well as arbitrary constant phase offsets. Its value is estimated but is, in itself, not useful for the purpose of sensor calibration.

As before, the error functions use the L1-norm instead of quadratic penalties to reduce the impact of outliers on the optimisation. The error minimisation can therefore be formulated as an iterated least-squares process applied to an over-determined system of equations of the form

$$W_{pq}^{s,rg} \left( \sum_{t'} w_{pq}^s(t') \left( (1+\Delta_c)c \left( \delta\tau_{pq}^s(t') + \left( 1 - \frac{1}{1+\Delta_c} \right) \tau_{pq}^s(t') \right) - \right. \right.$$
$$\left. \left. \delta los_{pq}^s(t') - \sum_{e \in \{p,q\}} \Delta r_e \right) \right) = 0 \tag{58}$$

and

$$W_{pq}^{s,\text{az}}(t') \left( \frac{(1+\Delta_c)c}{2\pi f_0} \left( \delta\phi_{pq}^{s,UW}(t') + \left( \frac{1}{1+\Delta_c} - 1 \right) \frac{2\pi f_0 \, r_{pq}^s(t')}{c} \right) + \right.$$
$$\left. \delta los_{pq}^s(t') - O_{pq}^s \right) = 0 \tag{59}$$

using weights

$$W_{pq}^{s,\text{rg}} = \frac{1}{\sqrt{E_{pq}^{s,\text{rg}} + \epsilon_{opt}}} \tag{60}$$

and

$$W_{pq}^{s,\text{az}}(t') = \frac{w_{pq}^s(t')}{\sqrt{E_{pq}^{s,\text{az}}(t') + \epsilon_{opt}}} \tag{61}$$

that are updated, before each iteration, on the basis of the current estimates of $\Delta_c$, $\Delta L_e$, $\Delta r_e$ and $O_{pq}^s$, all of which are initially set to zero. The system of equations to be solved in each iteration is linear in the unknowns provided that $r_{pq}^s(t')$, defined in eq. (12), and $\tau_{pq}^s(t')$, derived from $r_{pq}^s$ in eq. (14), are treated as fixed, precomputed quantities. In fact, however, both quantities do change when $\Delta L_e$ are updated, which would cause a small, second order inaccuracy in the estimation of $\Delta_c$. This marginal effect is counteracted by updating, after each iteration, $r_{pq}^s$ and $\tau_{pq}^s$ using the current estimates of $\Delta L_e$, while keeping $\Delta_c = 0$ in the evaluation of eq. (14).

Once the iteration has converged, for instance when the maximum lever arm change falls to a small fraction of the radar wavelength, the estimated range shifts $\Delta r_e$ can be converted into one-way antenna element propagation delays

using the estimated $\Delta_c$ via

$$\Delta\tau_e = \frac{\Delta r_e}{(1+\Delta_c)c}. \tag{62}$$

Finally, the reference target analysis of section § 1 is carried out anew for all data channels and reference targets to ensure that the updated calibration corrections are taken into account before proceeding further. In addition, for very large lever arm corrections that cause a measurable change in the line-of-sight vectors $los_e^s(t')$, it becomes necessary to repeat the entire estimation process, cumulating corrections $\Delta L_e$ and $\Delta\tau_e$.

## § 5 Interferometric Antenna Element Baseline Calibration

A further refinement of the antenna element phase centre position is possible using interferograms between filtered, range-compressed raw data channels derived for the same reference target. In contrast to the coarse estimate attained in section § 4, the refined estimate is independent of residual errors in the navigation data and the reference target positions. The two approaches are complementary in that the interferometric approach cannot determine absolute phase centre positions or accurately characterise tropospheric propagation effects. Instead, it yields highly accurate estimates of the spatial separation, or baseline, between antenna element phase centres.

The residual interferometric phase between two data channels $pq$ and uv corresponding to the same reference target $s$ is obtained as

$$\delta\phi_{pq,uv}^s(t) = \arg\left(INT_{t'\to t}\left[\exp\left(j\,\delta\phi_{pq}^s(t')\right)\right] INT_{t'\to t}\left[\exp\left(-j\,\delta\phi_{uv}^s(t')\right)\right]\right), \tag{63}$$

where $INT_{t'\to t}[\,]$ denotes interpolation from the channel time axis t' to the common time axis t introduced in eq. (1).
Analysis begins by grouping phase vectors

$$\delta\phi_{pq,uv}^1(t), \delta\phi_{pq,uv}^2(t), \delta\phi_{pq,uv}^3(t)\dots \tag{64}$$

derived for all available reference targets s = 1,2,3 ... in a particular interferometric channel combination $pq,uv$. As in the error model of eq. (57), these phases must first be unwrapped. To ensure that the interferometric phase information for different reference targets remains consistent, which is necessary for 3D baseline refinement, this phase unwrapping must be carried out in two dimensions. To this end, each phase measurement $\delta\phi_{pq,uv}^s(t)$ is associated with a 2D coordinate $(r_0, \beta)$ where

$$r_0 = \min\left(r_{pq}^s(t)\right) \tag{65}$$

$$\beta = \arccos\left(\frac{r_0}{r_{pq}^s(t)}\right), \tag{66}$$

and $r_{pq}^s(t)$ is obtained from $r_{pq}^s(t')$ by interpolation. The 2D coordinates corresponding to all phase vectors in groups like (64) are triangulated and the application of a phase unwrapping algorithm for irregular grids yields unwrapped phase vectors $\delta\phi_{pq,uv}^{1,UW}(t), \delta\phi_{pq,uv}^{2,UW}(t), \delta\phi_{pq,uv}^{3,UW}(t)\dots$. As in section § 4, bias due to potential unwrapping errors is minimised by restricting the analysis to the largest connected set of phase measurements with a combined coherence $w_{pq}^s * w_{uv}^s$ above a certain threshold, where connectivity is defined in terms of the 2D triangulated mesh of measurement points. In addition, the estimation of phase calibration constants requires that phase unwrapping preserves the average phase of the input samples.
The error model used for baseline refinement can be stated as

$$E_{pq,uv}^{s}(t) = w_{pq}^{s}(t)w_{uv}^{s}(t)\left| \delta\phi_{pq,uv}^{s,UW}(t) + \frac{2\pi f_0}{(1+\Delta c)c}\left( \delta los_{pq}^{s}(t) - \right.\right.$$
$$\left.\left. \delta los_{uv}^{s}(t) \right) - \Delta\phi_{pq,uv} \right| \tag{67}$$

where

$$\delta los_{pq}^{s}(t) = \sum_{e\in\{p,q\}} los_e^{s}(t) \cdot \Delta L_e^{inf} \tag{68}$$

and coherences $w_{pq}^{s}$ as well as line-of-sight vectors $los_e^{s}$ have been interpolated to the common time axis $t$. The variables $\Delta L_e^{inf}$, representing element-wise 3D lever arm refinements defined precisely as $\Delta L_e$ introduced in eq. (11), and $\Delta\phi_{pq,uv}$, representing phase calibration constants, are considered unknown variables.

The robust L1-norm minimisation of errors $E_{pq,uv}^{s}$ proceeds, as in preceding sections, by the iterative solution of a re-weighted, over-determined linear system of equations using least-squares techniques. Equations in the system take the form

$$W_{pq,uv}^{s}\left( \delta\phi_{pq,uv}^{s,UW}(t) + \frac{2\pi f_0}{(1+\Delta c)c}\left( \delta los_{pq}^{s}(t) - \delta los_{uv}^{s}(t) \right) - \Delta\phi_{pq,uv} \right) =$$
$$0, \tag{69}$$

with weights

$$W_{pq,uv}^{s}(t) = \frac{w_{pq}^{s}(t)w_{uv}^{s}(t)}{\sqrt{E_{pq,uv}^{s}(t)+\epsilon_{opt}}} \tag{70}$$

that are updated on the basis of the current estimates for $\Delta L_e^{inf}$ and $\Delta\phi_{pq}$ before each iteration. In addition, the system of equations must include three equations to account for the fact that interferometric analysis only yields relative position information:

$$\sum_e \Delta L_e^{inf} = \begin{pmatrix} 0 \\ 0 \\ 0 \end{pmatrix} \tag{71}$$

The system of equations would be singular without these additional constraints. They imply that interferometric baseline optimisation introduces corrections to the antenna element phase centre positions that conserve the geometric centre of the antenna array in the instrument coordinate system.

Upon convergence, when changes to $\Delta L_e^{inf}$ decrease below a small fraction of the radar wavelength, coarse lever arm corrections are updated to take into account the interferometric refinement as follows:

$$\Delta L_e \longleftarrow \Delta L_e + \Delta L_e^{inf} \tag{72}$$

Following the update, a final iteration of reference target analysis, using the updated element lever arms, is carried out to ensure a consistent basis for estimating calibration constants as described in the next section.

### § 6 Calibration Constants

Once the antenna array is considered well calibrated, it is possible to estimate calibration constants, at the level of the individual antenna array element, to ensure that the SAR imagery obtained after image formation can be directly related to physical parameters of the imaged scene. The corrections concern the one-way delay, gain and phase shift affecting signals upon propagation through a given antenna element, and are, for the most part, already estimated as by-products of optimisations in the preceding sections. To eliminate possible bias arising from the interplay of calibration corrections and the sequence in which they are estimated, the final set of calibration constants is re-derived as follows:

- The **element gain** $\Delta RCS_e$ is obtained by iteratively minimising eq. (49), keeping element mount angles $\Delta A_e$ fixed at their previously determined values.
- The **element delay** $\Delta\tau_e$ is obtained by iteratively minimising eq. (55), keeping element lever arm corrections $\Delta L_e$ and the tropospheric propagation correction $\Delta c$ fixed at their previously determined values, and applying eq. (62).

The phase calibration constants $\Delta\phi_{pq,uv}$ do not need to be re-estimated, as they are the product of the last calibration correction. These constants are, however, not specific to individual antenna elements but to a particular data channel combination, such that a post-processing step is required to derive per-element corrections. This step solves a system of equations of the form

$$\left(\Delta\phi_p + \Delta\phi_q\right) - \left(\Delta\phi_u + \Delta\phi_v\right) = \Delta\phi_{pq,uv} + 2\pi\, n_{pq,uv}, \tag{73}$$

where $\Delta\phi_e$ denotes the desired phase correction for antenna element $e$ and the unknown integer variables $n_{pq,uv}$ have had to be introduced to account for the fact that the measured phase offsets $\Delta\phi_{pq,uv}$ are wrapped within the range $-\pi$ to $\pi$. The presence of integer valued unknowns makes this problem very difficult to solve in general. Instead, the proposed approach is comparatively simple but imposes constraints on the combination of data channels available for calibration. This approach can be summarised as follows:

1. Initialise any one of the calibration constants $\Delta\phi_e$ to an arbitrary value
2. Identify an interferometric channel combination $pq, uv$ in which three of the four antenna elements involved have already been associated with phase calibration constants.
3. Solve the following equation for the remaining unknown phase calibration constant by straight-forward re-arrangement:

$$\left(\Delta\phi_p + \Delta\phi_q\right) - \left(\Delta\phi_u + \Delta\phi_v\right) = \Delta\phi_{pq,uv} \tag{74}$$

4. Continue at step 2 until all antenna elements have been associated with phase calibration constants.

The constraint on the data channels made available for calibration is that the condition in step 2 must be fulfilled in each iteration. Having initialised a single $\Delta\phi_e$ in step 1, it implies that the calibration data set includes channels corresponding to antenna element combinations $ee$ and $eq$ for the derivation of $\Delta\phi_q$ via $\Delta\phi_{ee,eq}$. After two elements are associated with phase calibration constants, there is an increasing amount of freedom in the channel combinations sufficient for calibration.

It should be noted that the arbitrary initialisation does not have any impact on the sensor calibration in the sense that the choice of initial value has no impact on any conceivable interferometric measurement the sensor can carry out.

The process outlined for element-wise phase correction derives each calibration constant from a single interferometric measurement $\Delta\phi_{pq,uv}$, such that many of the possible interferometric channel combinations are never, in fact, used. This is sub-optimal in terms of measurement noise affecting the estimates $\Delta\phi_{pq,uv}$. The phase calibration is therefore refined in a second processing step that begins with determining the wrapping numbers on the basis of the initial values of $\Delta\phi_e$:

$$n_{pq,uv} = \left\| \frac{(\Delta\phi_p + \Delta\phi_q) - (\Delta\phi_u + \Delta\phi_v) - \Delta\phi_{pq,uv}}{2\pi} \right\|, \tag{75}$$

where $\|\ \|$ denotes rounding of the enclosed quantity to the nearest integer. Once the wrapping numbers are known, the over-determined system of equations represented by eq. (73) is easy to solve using standard least-squares techniques to obtain refined element-wise phase calibration constants based on the full set of possible interferometric channel combinations.

## § 7 Disjoint transmit/receive antenna arrays

The element-wise calibration of an antenna array as outlined in sections § 2 to § 5 has implicitly assumed that at least one array element can both transmit and receive signals. For sensors that employ disjoint transmit and receive antenna arrays, in which each element either transmits or receives, this is not the case and the estimation of calibration corrections fails due to the fact that the systems of equations proposed become singular.

To extend the calibration approach to these types of SAR sensors, it is necessary to further constrain the optimisation by performing, symbolically, the following substitutions for a single, arbitrarily chosen antenna element $e$:

$$\Delta C_e^{gain}(f) \triangleq \frac{1}{E-1}\sum_{p\neq e}\Delta C_p^{gain}(f) \quad \text{in section § 2} \tag{76}$$

$$\Delta C_e^{phase}(f) \triangleq \frac{1}{E-1}\sum_{p\neq e}\Delta C_p^{phase}(f) \quad \text{in section § 2} \tag{77}$$

$$\Delta RCS_e \triangleq \frac{1}{E-1}\sum_{p\neq e}\Delta RCS_p \quad \text{in section § 3} \tag{78}$$

$$\Delta r_e \triangleq \frac{1}{E-1}\sum_{p\neq e}\Delta r_e \quad \text{in section § 4} \tag{79}$$

$$\Delta L_e \triangleq \frac{1}{E-1}\sum_{p\neq e}\Delta L_e \quad \text{in sections § 4 and § 5} \tag{80}$$

$$\Delta L_e^{inf} \triangleq \frac{1}{E-1}\sum_{p\neq e}\Delta L_e^{inf} \quad \text{in section § 5} \tag{81}$$

The antenna element mount angles $\Delta A_e$ are not affected, provided that the transmit and receive elements have different antenna illumination diagrams.

In addition, the initialisation of the iterative algorithm for the element-wise phase calibration of the array in section § 6 must be adjusted: instead of initialising a single phase calibration constant $\Delta\phi_e$ in step 1, it is necessary to initialise two constants $\Delta\phi_u$ and $\Delta\phi_v$, where $u$ and $v$ correspond to one transmit and one receive antenna element.

While the quality of the resulting calibration is not impaired for this type of sensor, the element-wise calibration corrections no longer have an absolute meaning: only differences between the calibration corrections for individual array elements can be meaningfully analysed.

## § 8 Multistatic SAR

Multistatic SAR involves the joint analysis and processing of radar data acquired by a formation of independent SAR sensors. If each SAR sensor in the formation can both receive and transmit signals, each can be calibrated as a monostatic system using the approaches described. Should this not be the case, however, the entire formation must be jointly calibrated.

In doing so, the proposed approach is affected only in that each sensor provides its own navigation data N(t) of eq. (1) and attitudes A(t) of eq. (2). The reference target analysis of section § 1 must therefore ensure that the underlying geometric transforms in equations (3), (4) and (5) are based on the navigation data appropriate for the particular antenna element under consideration. The remainder of the calibration approach is unaffected.

## § 9 Summary and advantages

The invention as described in the foregoing has several advantages. It provides an accurate calibration of multi-channel SAR instruments, such as those required to support SAR polarimetry, single-pass interferometry and digital beam-forming, on the basis of dedicated SAR acquisitions containing reference targets with known properties.

Unlike conventional approaches, the method is based on the analysis of range compressed raw data. It does not require SAR image focussing in azimuth, which is essential in cases where azimuth focussing requires beam-forming techniques and thus presupposes an accurate calibration of the antenna array.

The method assumes that the internal calibration sub-system of the sensor is able to effectively compensate for transient drifts due to propagation effects within the radar instrument. The focus is, instead, on providing an accurate and consistent characterisation of the antenna array, which is, by definition, outside the scope of internal calibration techniques. The approach introduces an explicit model of possible calibration error sources and uses SAR measurements to derive corresponding corrections. The error sources considered, for each antenna element in an array, are as follows:

**1. Element mount angles:** these describe a mispointing of the antenna element in terms of the attitude angles pitch, yaw and roll. Accurate determination of mount angles enables accurate radiometric calibration of SAR imagery in arbitrary imaging geometries. Non-zero mount angles occur due to alignment errors during the on-ground characterisation of antenna element illumination patterns, due to angular tilts of the antenna upon deployment and/or due to attitude offsets in the data provided by the navigation subsystem of the instrument.

**2. Element baselines:** The relative separation between element phase centres. Accurate knowledge of baselines is essential for multi-channel SAR sensors, as even small baseline errors translate to phase errors that distort interferometric and polarimetric SAR measurements as well as the effective antenna illumination pattern when beam-forming is employed. Although the separation of phase centres can be derived from phase measurements of the element patterns on ground, residual errors arise when such measurements are simply not available or unreliable, or when baselines change upon deployment, e.g. due to panel tilts or the absence of gravitational distortions of the antenna array that have impacted the on-ground characterisation.

**3. Absolute array position:** A reference point that, in conjunction with the element baselines, determines the absolute position of element phase centres in 3D space. Errors in the absolute array position translate into geo-location errors in the focussed SAR image. This type of error may arise due to imperfections in the deployment of the antenna array or systematic errors in the positioning information provided by the navigation sub-system of the instrument.

**4. Residual impulse response errors:** These are frequency dependent, incremental corrections to the characterisation of the radar instrument's transfer function provided by internal calibration measurements. These corrections account for amplitude and non-linear phase variations within the pulse bandwidth and are assumed to be stable over time and independent of propagation direction in three dimensional space.

**5. Calibration constants:** Constant corrections in terms of intensity, delay and phase can be derived once other corrections have been taken into account. These constants are introduced to ensure the absolute calibration of the SAR instrument and ensure that SAR imagery can be related to physical properties of the imaged scene in terms of backscatter intensity, geo-location and inter-channel phase differences.

**6. Residual errors:** Frequency and propagation direction dependent amplitude and phase errors that remain after all corrections have been taken into account serve to validate the error model used and point to remaining calibration issues. The detailed characterisation of unexpected residual errors helps to identify possible causes and formulate mitigation strategies. As an example, residual errors may include the propagation direction dependent effects introduced by antenna array element coupling that could not be adequately modelled or characterised on ground.

The results of the analyses carried out for each point in the above list serve the dual purpose of validation. They provide a granular picture of the calibration corrections required that can then be assessed with respect to prior expectations to pinpoint issues related to the on-ground characterisation process, the internal calibration and navigation sub-systems and the sensor deployment process. Regular calibration data takes enable detailed monitoring of the instrument stability, especially with respect to the performance of the antenna array, and the introduction of additional corrections when and if they become necessary.

The proposed calibration technique as described herein is fundamentally different to existing approaches in that it is based on the analysis of the response of reference targets in range compressed raw data. Conventional external calibration approaches, by contrast, use focussed SAR imagery, while data-driven approaches that are based on range compressed SAR data do not take advantage of reference targets. The following description highlights specific, unique characteristics of the proposed approach that largely stem from this fundamental difference. The names of particular processing steps are typeset in bold and refer to the flowcharts of Fig. 2.

The pre-processing of SAR raw data includes a **Response Correction** that, among other things, removes aliasing from the reference target response of each individual data channel without resorting to beam-forming techniques. Existing calibration techniques do not apply to sub-sampled data or use beam-forming techniques that are problematic when applied before the antenna array is fully calibrated. Pre-processing also includes a novel filtering operation for **Clutter Suppression,** in which the response of the reference target is cleanly separated out by suppressing backscatter contributions from other parts of the imaged scene.

The **Residual Error Analysis,** carried out on the pre-processed raw data, identifies residual deviations from the expected reference target response in terms of range position, phase and backscatter intensity. In contrast to conventional external calibration approaches, which analyse reference targets in focussed SAR imagery, this analysis captures variations within the illumination time, i.e. along azimuth. In particular, the analysis yields the target radar cross section (RCS) as measured by each received echo in the radar raw data by applying the radar equation for real aperture radar.

The **Residual Range IRF** analysis uses a robust (L1-Norm minimisation) algorithm for estimating residual, radar frequency-dependent amplitude and phase variations. This optimisation algorithm explicitly takes into account the frequency response measured in each echo received from reference targets and has not been used in this context before. The approach makes the estimates derived more robust with respect to outliers caused by residual clutter and radio frequency interference.

The **Element Mount Angles** estimation introduces pointing corrections that minimise the observed RCS deviations, taking into account the sensor attitude angles and possible variations thereof during the illumination time. Other calibration approaches do not include such mount angles at all, such that both the error model used and the estimation algorithm can be considered novel.

The approach includes a two-step refinement of antenna element phase centre positions. The first step, **Element Lever Arms,** provides coarse corrections that minimise the observed range position discrepancies and phase errors along azimuth (I.e. during the illumination time). The underlying error model and the estimation algorithm differ from existing approaches in that:

- The combination of input measurements used is unique, in that conventional external calibration approaches do not take into account azimuth-variant phase discrepancies while data-driven approaches cannot take into account range position discrepancies.
- The error model explicitly includes tropospheric propagation effects, which are not considered by existing calibration approaches.
- The error model explicitly takes into account the sensor attitude angles and possible variations thereof during the illumination time. Existing calibration approaches do not take into account sensor attitudes.
- The approach provides 3D position corrections. Other calibration techniques are restricted to one or two dimensions or do not provide an explicit estimate at all (e.g. some data-driven approaches merely carry out a phase correction without explicitly estimating position errors).

In a subsequent refinement step, highly accurate estimates of the **Element Baselines** are obtained by minimising interferometric phase errors. The approach differs from existing techniques by taking into account interferometric phase variations within the illumination time and sensor attitude angles and providing 3D baseline error estimates.

Finally, the estimation of **Calibration Constants** is achieved by robust L1-Norm optimisation, which has not been used in this context before. In addition, it includes an iterative algorithm for estimating element-wise phase calibration constants from wrapped interferometric phase measurements. This novel algorithm could also be applied in the context of conventional external calibration approaches.

In the foregoing, an embodiment of the invention has been described including calibration procedures S2 to S4 in combination with reference target analyses TA1 to TA4. However, the invention may also be implemented by only performing a sub-set of those calibration procedures. Furthermore, the calibration procedure according to step S1 is optional and may be omitted in specific embodiments of the invention.

Analogously, step S5, referring to the determination of calibration constants, may be omitted in specific embodiments of the invention. Moreover, steps S101 to S05 of the reference target analysis may be implemented in a different way as long as target data for each channel and each reference target are extracted appropriately. Particularly, the clutter suppression of step S104 may be omitted in case that the SAR raw data comprise little or no clutter.

## Claims

1. A method for computer-assisted processing of SAR raw data ($D_{pq}$), comprising radar echoes from ground that are the response to radar pulses (RP) that have been transmitted by antenna elements (101, 102, 103) of a radar sensor (1) on at least one flying object (SA) moving in an azimuth direction (x) above ground and where the radar echoes have been received by antenna elements (101, 102, 103) of the radar sensor (1), the SAR raw data ($D_{pq}$) including radar echoes originating from reference targets (RT) with known radar cross sections and positions on ground and being represented by data acquisitions for several channels (pq), each channel (pq) referring to radar pulses transmitted by a specific antenna element (101, 102, 103) and radar echoes received by a specific antenna element (101, 102, 103) at radar sensor positions and radar sensor attitude angles provided by a navigation sub-system on the at least one flying object (SA), where the data acquisition for a channel (pq) comprises a plurality of data samples for several azimuth positions and several range positions, the range positions corresponding to different distances from the radar sensor (1) to ground, wherein the method comprises one or more calibration procedures (TA2, S2; TA3, S3; TA4, S4), each calibration procedure comprising the following steps:

i) by using the known radar cross section and position on ground for each reference target (RT), extracting target data ($F^s_{pq}$) for each reference target (RT) in each channel (pq) from the SAR raw data ($D_{pq}$) and determining a variation of one or more measurements ($\delta\phi^s_{pq}$, $\delta RCS^s_{pq}$, $\delta\phi^s_{pq,uv}$) over different radar echoes originating from each reference target (RT) for each channel (pq) or for each combination of two channels (pq) based on the target data ($F^s_{pq}$);

ii) determining one or more calibration factors in the form of one or more correction terms ($\Delta A_e$, $\Delta L_e$, $\Delta L_e^{inf}$) for one or more sensor parameters of the radar sensor (1) based on an optimisation comprising the optimisation goal to minimise the variation of the one or more measurements ($\delta\phi^s_{pq}$, $\delta RCS^s_{pq}$, $\delta\phi^s_{pq,uv}$) for all reference targets (RT) and for all channels (pq) or all combinations of two channels (pq).

2. The method according to claim 1, wherein the one or more calibration procedures (TA2, S2; TA3, S3; TA4, S4) comprise a first calibration procedure (TA2, S2) wherein the variation of a measurement determined in step i) refers to the variation of a radar cross section offset ($\delta RCS^s_{pq}$) over different radar echoes originating from each reference target (RT) in each channel (pq) and wherein correction terms ($\Delta A_e$) for sensor parameters in the form of antenna mount angles of each antenna element (101, 102, 103) on the at least one flying object (1) are determined in step ii), where the radar cross section offset ($\delta RCS^s_{pq}$) represents the difference between the known radar cross section and the radar cross section according to the target data ($F^s_{pq}$) for the respective reference target (RT) and the respective channel (pq) .

3. The method according to claim 1 or 2, wherein the one or more calibration procedures (TA2, S2; TA3, S3; TA4, S4) comprise a second calibration procedure (TA3, S3) wherein the variation of a measurement determined in step i) refers to the variation of a residual phase ($\delta\phi^s_{pq}$) over different radar echoes originating from each reference target (RT) in each channel (pq) and wherein correction terms ($\Delta L_e$) for sensor parameters in the form of relative positions of the phase centres of the antenna elements (101, 102, 103) with respect to a reference position on the at least one flying object (1) are determined in step ii), where the residual phase ($\delta\phi^s_{pq}$) for a respective channel (pq) represents the difference between the phase of a radar echo based on the positions of the transmitting and receiving antenna element phase centres of the respective channel (pq) and based on the known position of the respective reference target (RT) on ground on the one hand and the phase according to the target data for the respective reference target (RT) on the other hand, where preferably the optimisation within the second calibration procedure (TA3, S3) includes the additional optimisation goal to minimise the mean residual delay ($\delta\tau^s_{pq}$) over different radar echoes originating from each reference target (RT) in each channel (pq), where the residual delay ($\delta\tau^s_{pq}$) for a respective channel (pq) represents the difference between the propagation time from transmitting a radar pulse until receiving its radar echo based on the positions of the transmitting and receiving antenna element phase centres of the respective channel (pq) and based on the known position of the respective reference target (RT) on ground on the one hand and the corresponding propagation time according to the target data for the respective reference target (RT) on the other hand.

4. The method according to any of the preceding claims, wherein the one or more calibration procedures (TA2, S2; TA3, S3; TA4, S4) comprise a third calibration procedure (TA4, S4) wherein the variation of a measurement determined in step i) refers to the variation of the difference ($\delta\phi^s_{pq,uv}$) between two residual phases for two channels (pq) over different radar echoes originating from each reference target (RT) in each combination of two channels (pq) and wherein correction terms ($\Delta L_e^{inf}$) for sensor parameters in the form of relative positions of the phase centres of the antenna elements (101, 102, 103) with respect to a reference position on the at least one flying object (1) are determined in step ii), where the residual phase ($\delta\phi^s_{pq}$) for a respective channel (pq) represents the difference between the phase of a radar echo based on the positions of the transmitting and receiving antenna element phase centres of the respective channel (pq) and based on the known position of the respective reference target (RT) on ground on the one hand and the phase according to the target data for the respective reference target (RT) on the other hand.

5. The method according to claims 2 to 4, wherein the method comprises the first and the second and the third calibration procedures (TA2, S2; TA3, S3; TA4, S4), where preferably the third calibration procedure is performed after the second calibration procedure and the second calibration procedure is performed after the first calibration procedure.

6. The method according to any of the preceding claims, wherein the method comprises several calibration procedures (TA2, S2; TA3, S3; TA4, S4) which are performed based on an iteration, where each calibration procedure constitutes an iteration step and where step i) of an iteration step takes into account one or more calibration factors determined in all preceding iteration steps.

7. The method according to any of the preceding claims, wherein the extraction of target data ($F^s_{pq}$) for each reference target (RT) and each channel (pq) in step i) of at least one calibration procedure comprises a range compression and a correction based on the known radar cross section and the known position of the respective reference target (RT) on ground.

8. The method according to any of the preceding claims, wherein the extraction of target data ($F^s_{pq}$) for each reference target (RT) and each channel (pq) in step i) of at least one calibration procedure comprises a clutter suppression for suppressing radar echoes originating from scatterers other than the respective reference target (RT).

9. The method according to any of the preceding claims, wherein the method comprises a separate calibration procedure (TA1, S1) in addition to the one or more calibration procedures (TA2, S2; TA3, S3; TA4, S4), where the separate calibration procedure (TA1, S1) comprises the following steps:

a) by using the known radar cross section and position on ground for each reference target (RT), extracting target data ($F^s_{pq}$) for each reference target (RT) in each channel (pq) from the SAR raw data ($D_{pq}$) and determining the variation of a residual delay ($\delta\tau^s_{pq}$) over different radar echoes originating from each reference target (RT) in each channel (pq), where the residual delay ($\delta\tau^s_{pq}$) for a respective channel (pq) represents the difference between the propagation time from transmitting a radar pulse until receiving its radar echo based on the positions of the transmitting and receiving antenna element phase centres of the respective channel (pq) and based on the known position of the respective reference target (RT) on ground on the one hand and the corresponding propagation time according to the target data for the respective reference target (RT) on the other hand;
b) estimating frequency-dependent phase and amplitude variations within the bandwidth of the radar echoes by determining calibration factors in the form of correction terms ($\Delta C_e$) for the respective antenna elements (101, 102, 103) based on a minimisation of error functions, where at least one error function is defined over different radar echoes originating from each reference target (RT) in each channel (pq), the at least one error function being defined based on a frequency response function for each radar echo originating from the respective reference target (RT) in the respective channel (pq), where the frequency response function is derived from the target data ($F^s_{pq}$) and the variation of the residual delay ($\delta\tau^s_{pq}$) obtained in step a).

10. The method according to claim 9 in combination with claim 6, wherein the separate calibration procedure (TA1, S1) is part of the iteration and forms an iteration step therein, where step i) of all iteration steps after the iteration step of the separate calibration procedure (TA1, S1) takes into account the calibration factors determined in step b).

11. The method according to any of the preceding claims, wherein, after performing the one or more calibration procedures, one or more calibration constants ($\Delta RCS_e$, $\Delta\tau_e$, $\Delta\phi_e$) are determined, any of which ($\Delta RCS_e$, $\Delta\tau_e$, $\Delta\phi_e$) provided to be applied in a later processing of other SAR raw data as overall, constant corrections to the entire SAR raw data or entire images derived from the SAR raw data.

12. An apparatus for computer-assisted processing of SAR raw data ($D_{pq}$), comprising radar echoes from ground that are the response to radar pulses (RP) that have been transmitted by antenna elements (101, 102, 103) of a radar sensor (1) on at least one flying object (SA) moving in an azimuth direction (x) above ground and where the radar echoes have been received by antenna elements (101, 102, 103) of the radar sensor (1), the SAR raw data ($D_{pq}$) including radar echoes originating from reference targets (RT) with known radar cross sections and positions on ground and being represented by data acquisitions for several channels (pq), each channel (pq) referring to radar pulses transmitted by a specific antenna element (101, 102, 103) and radar echoes received by a specific antenna element (101, 102, 103) at radar sensor positions and radar sensor attitude angles provided by a navigation sub-system on the at least one flying object (SA), where the data acquisition for a channel (pq) comprises a plurality of data samples for several azimuth positions and several range positions, the range positions the range positions corresponding to different distances from the radar sensor (1) to ground,
wherein that the apparatus is configured to perform a method comprising one or more calibration procedures (TA2, S2; TA3, S3; TA4, S4), each calibration procedure comprising the following steps:

i) by using the known radar cross section and position on ground for each reference target (RT), extracting target data ($F^s_{pq}$) for each reference target (RT) in each channel (pq) from the SAR raw data ($D_{pq}$) and determining a variation of one or more measurements ($\delta\phi^s_{pq}$, $\delta RCS^s_{pq}$, $\delta\phi^s_{pq,uv}$) within a set of radar echoes originating from each reference target (RT) for each channel (pq) or for each combination of two channels (pq) based on the target data ($F^s_{pq}$);
ii) determining one or more calibration factors in the form of one or more correction terms ($\Delta A_e$, $\Delta L_e$, $\Delta L_e^{inf}$) for one

or more sensor parameters of the radar sensor (1) based on an optimisation comprising the optimisation goal to minimise the variation of the one or more measurements ($\delta\phi^s_{pq}$, $\delta RCS^s_{pq}$, $\delta\phi^s_{pq,uv}$) for all reference targets (RT) and for all channels (pq) or all combinations of two channels (pq).

13. The apparatus according to claim 12, wherein the apparatus is configured to perform a method according to one of claims 2 to 11.

14. A computer program product comprising program code stored on a machine readable medium, wherein the program code is configured to perform a method according to one of claims 1 to 11, when the program code is run on a computer.

15. A computer program comprising program code, wherein the program code is configured to perform a method according to one of claims 1 to 11, when the program code is run on a computer.

**Patentansprüche**

1. Verfahren zur rechnergestützten Verarbeitung von SAR-Rohdaten ($D_{pq}$), umfassend Radarechos vom Boden, die die Antwort auf Radarpulse (RP) sind, die von Antennenelementen (101, 102, 103) eines Radarsensors (1) auf mindestens einem Flugobjekt (SA), das sich in einer Azimut-Richtung (x) über dem Boden bewegt, ausgesendet wurden, und wobei die Radarechos von Antennenelementen (101, 102, 103) des Radarsensors (1) empfangen wurden, wobei die SAR-Rohdaten ($D_{pq}$) Radarechos enthalten, die von Referenzzielen (RT) mit bekannten Radarquerschnitten und bekannten Positionen am Boden stammen und durch Datenakquisitionen für mehrere Kanäle (pq) repräsentiert werden, wobei jeder Kanal (pq) sich auf Radarpulse bezieht, die von einem bestimmten Antennenelement (101, 102, 103) ausgesendet wurden, und auf Radarechos, die von einem bestimmten Antennenelement (101, 102, 103) an Radarsensorpositionen und Radarsensorlagewinkeln empfangen wurden, die von einem Navigationssubsystem auf dem mindestens einen Flugobjekt (SA) bereitgestellt werden, wobei die Datenakquisition für einen Kanal (pq) eine Vielzahl von Datenabtastungen für mehrere Azimut-Positionen und mehrere Range-Positionen umfasst, wobei die Range-Positionen unterschiedlichen Entfernungen des Radarsensors (1) zum Boden entsprechen,
   wobei das Verfahren ein oder mehrere Kalibrierverfahren (TA2, S2; TA3, S3; TA4, S4) umfasst, wobei jedes Kalibrierverfahren die folgenden Schritte umfasst:

   i) unter Verwendung des bekannten Radarquerschnitts und der bekannten Position am Boden für jedes Referenzziel (RT), Extrahieren von Zieldaten ($F^s_{pq}$) für jedes Referenzziel (RT) in jedem Kanal (pq) aus den SAR-Rohdaten ($D_{pq}$) und Bestimmen einer Variation einer oder mehrerer Messungen ($\delta\phi^s_{pq}$, $\delta RCS^s_{pq}$, $\delta\phi^s_{pq,uv}$) über verschiedene Radarechos, die von jedem Referenzziel (RT) für jeden Kanal (pq) oder für jede Kombination von zwei Kanälen (pq) stammen, basierend auf den Zieldaten ($F^s_{pq}$);
   ii) Bestimmen eines oder mehrerer Kalibrierfaktoren in Form eines oder mehrerer Korrekturterme ($\Delta A_e$, $\Delta L_e$, $\Delta L_e^{inf}$) für einen oder mehrere Sensorparameter des Radarsensors (1) basierend auf einer Optimierung, die das Optimierungsziel umfasst, die Variation der einen oder mehreren Messungen ($\delta\phi^s_{pq}$, $\delta RCS^s_{pq}$, $\delta\phi^s_{pq,uv}$) für alle Referenzziele (RT) und für alle Kanäle (pq) oder alle Kombinationen von zwei Kanälen (pq) zu minimieren.

2. Verfahren nach Anspruch 1, wobei das eine oder die mehreren Kalibrierverfahren (TA2, S2; TA3, S3; TA4, S4) ein erstes Kalibrierverfahren (TA2, S2) umfassen, wobei sich die in Schritt i) bestimmte Variation einer Messung auf die Variation eines Radarquerschnittsversatzes ($\delta RCS^s_{pq}$) über verschiedene Radarechos bezieht, die von jedem Referenzziel (RT) in jedem Kanal (pq) stammen, und wobei in Schritt ii) Korrekturterme ($\Delta A_e$) für Sensorparameter in Form von Antennenaufstellwinkeln jedes Antennenelements (101, 102, 103) an dem mindestens einen Flugobjekt (1) bestimmt werden, wobei der Radarquerschnittsversatz ($\delta RCS^s_{pq}$) die Differenz zwischen dem bekannten Radarquerschnitt und dem Radarquerschnitt gemäß den Zieldaten ($F^s_{pq}$) für das jeweilige Referenzziel (RT) und den jeweiligen Kanal (pq) repräsentiert.

3. Verfahren nach Anspruch 1 oder 2, wobei das eine oder die mehreren Kalibrierverfahren (TA2, S2; TA3, S3; TA4, S4) ein zweites Kalibrierverfahren (TA3, S3) umfassen, wobei sich die in Schritt i) bestimmte Variation einer Messung auf die Variation einer Restphase ($\delta\phi^s_{pq}$) über verschiedene Radarechos bezieht, die von jedem Referenzziel (RT) in jedem Kanal (pq) stammen, und wobei in Schritt ii) Korrekturterme ($\Delta L_e$) für Sensorparameter in Form von Relativpositionen der Phasenzentren der Antennenelemente (101, 102, 103) bezüglich einer Referenzposition auf dem mindestens einen Flugobjekt (1) bestimmt werden, wobei die Restphase ($\delta\phi^s_{pq}$) für einen jeweiligen Kanal (pq) die Differenz zwischen der Phase eines Radarechos basierend auf den Positionen der sendenden und empfangenden Antennenelement-Phasenzentren des jeweiligen Kanals (pq) und basierend auf der bekannten Position des jeweiligen Referenzziels (RT) am Boden einerseits und der Phase gemäß den Zieldaten für das jeweilige Referenzziel (RT) andererseits repräsentiert, wobei vorzugsweise die Optimierung innerhalb des zweiten Kalibrierverfahrens (TA3, S3) das zusätzliche Optimierungsziel umfasst, die mittlere Restverzögerung ($\delta\tau^s_{pq}$) über verschiedene Radarechos, die von jedem Referenzziel (RT) in jedem Kanal (pq) stammen, zu minimieren, wobei die Restverzögerung ($\delta\tau^s_{pq}$) für einen jeweiligen Kanal (pq) die Differenz zwischen der Laufzeit vom Aussenden eines Radarpulses bis zum Empfang seines Radarechos basierend auf den Positionen der Phasenzentren des sendenden und empfangenden Antennenelements des jeweiligen Kanals (pq) und basierend auf der bekannten Position des jeweiligen Referenzziels (RT) am Boden einerseits und der entsprechenden Laufzeit gemäß den Zieldaten für das jeweilige Referenzziel (RT) andererseits darstellt.

4. Verfahren nach einem der vorhergehenden Ansprüche, wobei das eine oder die mehreren Kalibrierverfahren (TA2, S2; TA3, S3; TA4, S4) ein drittes Kalibrierverfahren (TA4, S4) umfassen, wobei sich die in Schritt i) bestimmte Variation einer Messung auf die Variation der Differenz ($\delta\phi^s_{pq,uv}$) zwischen zwei Restphasen für zwei Kanäle (pq) über verschiedene Radarechos bezieht, die von jedem Referenzziel (RT) in jeder Kombination von zwei Kanälen (pq) stammen, und wobei in Schritt ii) Korrekturterme ($\Delta L_e^{inf}$) für Sensorparameter in Form von Relativpositionen der Phasenzentren der Antennenelemente (101, 102, 103) bezüglich einer Referenzposition auf dem mindestens einen Flugobjekt (1) bestimmt werden, wobei die Restphase ($\delta\phi^s_{pq}$) für einen jeweiligen Kanal (pq) die Differenz zwischen der Phase eines Radarechos basierend auf den Positionen der sendenden und empfangenden Antennenelement-Phasenzentren des jeweiligen Kanals (pq) und basierend auf der bekannten Position des jeweiligen Referenzziels (RT) am Boden einerseits und der Phase gemäß den Zieldaten für das jeweilige Referenzziel (RT) andererseits repräsentiert.

5. Verfahren nach Ansprüchen 2 bis 4, wobei das Verfahren das erste und das zweite und das dritte Kalibrierverfahren (TA2, S2; TA3, S3; TA4, S4) umfasst, wobei vorzugsweise das dritte Kalibrierverfahren nach dem zweiten Kalibrierverfahren durchgeführt wird und das zweite Kalibrierverfahren nach dem ersten Kalibrierverfahren durchgeführt wird.

6. Verfahren nach einem der vorhergehenden Ansprüche, wobei das Verfahren mehrere Kalibrierverfahren (TA2, S2; TA3, S3; TA4, S4) umfasst, die basierend auf einer Iteration durchgeführt werden, wobei jedes Kalibrierverfahren einen Iterationsschritt darstellt und wobei Schritt i) eines Iterationsschritts einen oder mehrere Kalibrierfaktoren berücksichtigt, die in allen vorhergehenden Iterationsschritten bestimmt wurden.

7. Verfahren nach einem der vorhergehenden Ansprüche, wobei die Extraktion von Zieldaten ($F^s_{pq}$) für jedes Referenzziel (RT) und jeden Kanal (pq) in Schritt i) mindestens eines Kalibrierverfahrens eine Range-Kompression und eine Korrektur basierend auf dem bekannten Radarquerschnitt und der bekannten Position des jeweiligen Referenzziels (RT) am Boden umfasst.

8. Verfahren nach einem der vorhergehenden Ansprüche, wobei die Extraktion von Zieldaten ($F^s_{pq}$) für jedes Referenzziel (RT) und jeden Kanal (pq) in Schritt i) mindestens eines Kalibrierverfahrens eine Störunterdrückung zum Unterdrücken von Radarechos umfasst, die von anderen Streuern als dem jeweiligen Referenzziel (RT) stammen.

9. Verfahren nach einem der vorhergehenden Ansprüche, wobei das Verfahren zusätzlich zu dem einen oder den mehreren Kalibrierverfahren (TA2, S2; TA3, S3; TA4, S4) ein separates Kalibrierverfahren (TA1, S1) umfasst, wobei das separate Kalibrierverfahren (TA1, S1) die folgenden Schritte umfasst:

a) unter Verwendung des bekannten Radarquerschnitts und der bekannten Position am Boden für jedes Referenzziel (RT), Extrahieren von Zieldaten ($F^s_{pq}$) für jedes Referenzziel (RT) in jedem Kanal (pq) aus den SAR-Rohdaten ($D_{pq}$) und Bestimmen der Variation einer Restverzögerung ($\delta\tau^s_{pq}$) über verschiedene Radarechos, die von jedem Referenzziel (RT) in jedem Kanal (pq) stammen, wobei die Restverzögerung ($\delta\tau^s_{pq}$) für einen jeweiligen Kanal (pq) die Differenz zwischen der Laufzeit vom Aussenden eines Radarpulses bis zum Empfang seines Radarechos basierend auf den sendenden und empfangenden Antennenelement-Phasenzentren des jeweiligen Kanals (pq) und basierend auf der bekannten Position des jeweiligen Referenzziels (RT) am Boden einerseits und der entsprechenden Laufzeit gemäß den Zieldaten für das jeweilige Referenzziel (RT) andererseits repräsentiert;

b) Schätzen von frequenzabhängigen Phasen- und Amplitudenvariationen innerhalb der Bandbreite der Radarechos durch Bestimmen von Kalibrierfaktoren in Form von Korrekturtermen ($\Delta C_e$) für die jeweiligen Antennenelemente (101, 102, 103) basierend auf einer Minimierung von Fehlerfunktionen, wobei mindestens eine Fehlerfunktion über verschiedene Radarechos definiert ist, die von jedem Referenzziel (RT) in jedem Kanal (pq) stammen, wobei die mindestens eine Fehlerfunktion basierend auf einer Frequenzgangfunktion für jedes Radarecho definiert ist, das von dem jeweiligen Referenzziel (RT) in dem jeweiligen Kanal (pq) stammt, wobei die Frequenzgangfunktion aus den Zieldaten ($F^s_{pq}$) und der Variation der Restverzögerung ($\delta\tau^s_{pq}$) abgeleitet ist, die in Schritt a) gewonnen wurde.

10. Verfahren nach Anspruch 9 in Kombination mit Anspruch 6, wobei das separate Kalibrierverfahren (TA1, S1) Teil der Iteration ist und darin einen Iterationsschritt bildet, wobei Schritt i) aller Iterationsschritte nach dem Iterationsschritt des separaten Kalibrierverfahrens (TA1, S1) die in Schritt b) bestimmten Kalibrierfaktoren berücksichtigt.

11. Verfahren nach einem der vorhergehenden Ansprüche, wobei nach Durchführung des einen oder der mehreren Kalibrierverfahren eine oder mehrere Kalibrierkonstanten ($\Delta RCS_e$, $\Delta\tau_e$ $\Delta\phi_e$) bestimmt werden, von denen jede ($\Delta RCS_e$, $\Delta\tau_e$ $\Delta\phi_e$) dazu vorgesehen ist, in einer späteren Verarbeitung anderer SAR-Rohdaten als gesamtkonstante Korrekturen auf die gesamten SAR-Rohdaten oder auf gesamte aus den SAR-Rohdaten abgeleitete Bilder angewendet zu werden.

12. Vorrichtung zur rechnergestützten Verarbeitung von SAR-Rohdaten ($D_{pq}$), umfassend Radarechos vom Boden, die die Antwort auf Radarpulse (RP) sind, die von Antennenelementen (101, 102, 103) eines Radarsensors (1) auf mindestens einem Flugobjekt (SA), das sich in einer Azimut-Richtung (x) über dem Boden bewegt, ausgesendet wurden, und wobei die Radarechos von Antennenelementen (101, 102, 103) des Radarsensors (1) empfangen wurden, wobei die SAR-Rohdaten ($D_{pq}$) Radarechos enthalten, die von Referenzzielen (RT) mit bekannten Radarquerschnitten und bekannten Positionen am Boden stammen und durch Datenakquisitionen für mehrere Kanäle (pq) repräsentiert werden, wobei jeder Kanal (pq) sich auf Radarpulse bezieht, die von einem bestimmten Antennenelement (101, 102, 103) ausgesendet wurden, und auf Radarechos, die von einem bestimmten Antennenelement (101, 102, 103) an Radarsensorpositionen und Radarsensorlagewinkeln empfangen wurden, die von einem Navigationssubsystem auf dem mindestens einen Flugobjekt (SA) bereitgestellt werden, wobei die Datenakquisition für einen Kanal (pq) eine Vielzahl von Datenabtastungen für mehrere Azimut-Positionen und mehrere Range-Positionen umfasst, wobei die Range-Positionen unterschiedlichen Entfernungen des Radarsensors (1) zum Boden entsprechen, wobei die Vorrichtung eingerichtet ist, ein Verfahren durchzuführen, das ein oder mehrere Kalibrierverfahren (TA2, S2; TA3, S3; TA4, S4) umfasst, wobei jedes Kalibrierverfahren die folgenden Schritte umfasst:

i) unter Verwendung des bekannten Radarquerschnitts und der bekannten Position am Boden für jedes Referenzziel (RT), Extrahieren von Zieldaten ($F^s_{pq}$) für jedes Referenzziel (RT) in jedem Kanal (pq) aus den SAR-Rohdaten ($D_{pq}$) und Bestimmen einer Variation einer oder mehrerer Messungen ($\delta\phi^s_{pq}$, $\delta RCS^s_{pq}$, $\delta\phi^s_{pq,uv}$) innerhalb eines Satzes von Radarechos, die von jedem Referenzziel (RT) für jeden Kanal (pq) oder für jede Kombination von zwei Kanälen (pq) stammen, basierend auf den Zieldaten ($F^s_{pq}$);
ii) Bestimmen eines oder mehrerer Kalibrierfaktoren in Form eines oder mehrerer Korrekturterme ($\Delta A_e$, $\Delta L_e$, $\Delta L_e^{inf}$) für einen oder mehrere Sensorparameter des Radarsensors (1) basierend auf einer Optimierung, die das Optimierungsziel umfasst, die Variation der einen oder mehreren Messungen ($\delta\phi^s_{pq}$, $\delta RCS^s_{pq}$, $\delta\phi^s_{pq,uv}$) für alle Referenzziele (RT) und für alle Kanäle (pq) oder alle Kombinationen von zwei Kanälen (pq) zu minimieren.

13. Vorrichtung nach Anspruch 12, wobei die Vorrichtung eingerichtet ist, ein Verfahren nach einem der Ansprüche 2 bis 11 durchzuführen.

14. Computerprogrammprodukt, das Programmcode umfasst, der auf einem maschinenlesbaren Medium gespeichert ist, wobei der Programmcode eingerichtet ist, ein Verfahren gemäß einem der Ansprüche 1 bis 11 auszuführen, wenn der Programmcode auf einem Computer ausgeführt wird.

15. Computerprogramm, umfassend Programmcode, wobei der Programmcode eingerichtet ist, ein Verfahren gemäß einem der Ansprüche 1 bis 11 auszuführen, wenn der Programmcode auf einem Computer ausgeführt wird.

**Revendications**

1. Procédé de traitement assisté par ordinateur de données brutes de RSO ($D_{pq}$), comprenant des échos radar provenant du sol qui sont la réponse à des impulsions radar (RP) qui ont été transmises par des éléments d'antenne (101, 102, 103) d'un capteur radar (1) sur au moins un objet volant (SA) se déplaçant dans une direction azimutale (x) au-dessus du sol et où les échos radar ont été reçus par des éléments d'antenne (101, 102, 103) du capteur radar (1), les données brutes de RSO ($D_{pq}$) incluant des échos radar provenant de cibles de référence (RT) avec des sections transversales de radar et positions au sol connues, et étant représentées par des acquisitions de données pour plusieurs canaux (pq), chaque canal (pq) désignant des impulsions radar transmises par un élément d'antenne spécifique (101, 102, 103) et des échos radar reçus par un élément d'antenne spécifique (101, 102, 103) à des positions de capteur radar et des angles d'attitude de capteur radar fournis par un sous-système de navigation sur l'au moins un objet volant (SA), où l'acquisition de données pour un canal (pq) comprend une pluralité d'échantillons de données pour plusieurs positions azimutales et plusieurs positions de distance, les positions de distance correspondant à différentes distances du capteur radar (1) au sol,

dans lequel le procédé comprend une ou plusieurs procédures d'étalonnage (TA2, S2 ; TA3, S3 ; TA4, S4), chaque procédure d'étalonnage comprenant les étapes suivantes :

i) en utilisant les section transversale de radar et position au sol connues pour chaque cible de référence (RT), extraire des données cibles ($F^s_{pq}$) pour chaque cible de référence (RT) dans chaque canal (pq) des données brutes de RSO ($D_{pq}$) et déterminer une variation d'une ou plusieurs mesures ($\delta ø^s_{pq}$, $\delta RCS^s_{pq}$, $\delta ø^3_{pq,uv}$) sur différents échos radar provenant de chaque cible de référence (RT) pour chaque canal (pq) ou pour chaque combinaison de deux canaux (pq) en fonction des données cibles ($F^s_{pq}$) ;

ii) déterminer un ou plusieurs facteurs d'étalonnage sous la forme d'un ou plusieurs termes de correction ($\Delta A_e$, $\Delta L_e$, $\Delta L_e^{inf}$) pour un ou plusieurs paramètres de capteur du capteur radar (1) en fonction d'une optimisation comprenant l'objectif d'optimisation de minimiser la variation de la ou des mesures ($\delta ø^s_{pq}$, $\delta RCS^s_{pq}$, $\delta ø^3_{pq,uv}$) pour l'ensemble des cibles de référence (RT) et pour l'ensemble des canaux (pq) ou l'ensemble des combinaisons de deux canaux (pq).

2. Procédé selon la revendication 1, dans lequel la ou les procédures d'étalonnage (TA2, S2 ; TA3, S3 ; TA4, S4) comprennent une première procédure d'étalonnage (TA2, S2), dans lequel la variation d'une mesure déterminée à l'étape i) désigne la variation d'un décalage de section transversale de radar ($\delta RCS^s_{pq}$) sur différents échos radar provenant de chaque cible de référence (RT) dans chaque canal (pq) et dans lequel des termes de correction ($\Delta A_e$) pour des paramètres de capteur sous la forme d'angles de monture d'antenne de chaque élément d'antenne (101, 102, 103) sur l'au moins un objet volant (1) sont déterminés à l'étape ii), où le décalage de section transversale de radar ($\delta RCS^s_{pq}$) représente la différence entre la section transversale de radar connue et la section transversale de radar en fonction des données cibles ($F^s_{pq}$) pour la cible de référence respective (RT) et le canal respectif (pq).

3. Procédé selon la revendication 1 ou 2, dans lequel la ou les procédures d'étalonnage (TA2, S2 ; TA3, S3 ; TA4, S4) comprennent une deuxième procédure d'étalonnage (TA3, S3), dans lequel la variation d'une mesure déterminée à l'étape i) désigne la variation d'une phase résiduelle ($\delta ø^s_{pq}$) sur différents échos radar provenant de chaque cible de référence (RT) dans chaque canal (pq) et dans lequel des termes de correction ($\Delta L_e$) pour des paramètres de capteur sous la forme de positions relatives des centres de phase des éléments d'antenne (101, 102, 103) par rapport à une position de référence sur l'au moins un objet volant (1) sont déterminés à l'étape ii), où la phase résiduelle ($\delta ø^s_{pq}$) pour un canal respectif (pq) représente la différence entre la phase d'un écho radar en fonction des positions des centres de phase d'élément d'antenne de transmission et de réception du canal respectif (pq) et en fonction de la position connue de la cible de référence respective (RT) au sol d'un côté et la phase en fonction des données cibles pour la cible de référence respective (RT) de l'autre, où l'optimisation au sein de la deuxième procédure d'étalonnage (TA3, S3) inclut de préférence l'objectif d'optimisation supplémentaire de minimiser le retard résiduel moyen ($\delta \tau^s_{pq}$) sur différents échos radar provenant de chaque cible de référence (RT) dans chaque canal (pq), où le retard résiduel ($\delta \tau^s_{pq}$) pour un canal respectif (pq) représente la différence entre le temps de propagation de la transmission d'une impulsion radar jusqu'à réception de son écho radar en fonction des positions des centres de phase d'élément d'antenne de transmission et de réception du canal respectif (pq) et en fonction de la position connue de la cible de référence respective (RT) au sol d'un côté et le temps de propagation correspondant en fonction des données cibles pour la cible de référence respective (RT) de l'autre.

4. Procédé selon l'une quelconque des revendications précédentes, dans lequel la ou les procédures d'étalonnage (TA2, S2 ; TA3, S3 ; TA4, S4) comprennent une troisième procédure d'étalonnage (TA4, S4), dans lequel la variation d'une mesure déterminée à l'étape i) désigne la variation de la différence ($\delta ø^s_{pq,uv}$) entre deux phases résiduelles pour deux canaux (pq) sur différents échos radar provenant de chaque cible de référence (RT) dans chaque combinaison de deux canaux (pq) et dans lequel des termes de correction ($\Delta L_e^{inf}$) pour des paramètres de capteur sous la forme de positions relatives des centres de phase des éléments d'antenne (101, 102, 103) par rapport à une position de référence sur l'au moins un objet volant (1) sont déterminés à l'étape ii), où la phase résiduelle ($\delta ø^s_{pq}$) pour un canal respectif (pq) représente la différence entre la phase d'un écho radar en fonction des positions des centres de phase d'élément d'antenne de transmission et de réception du canal respectif (pq) et en fonction de la position connue de la cible de référence respective (RT) au sol d'un côté et la phase en fonction des données cibles pour la cible de référence respective (RT) de l'autre.

5. Procédé selon les revendications 2 à 4, dans lequel le procédé comprend la première et la deuxième et la troisième procédures d'étalonnage (TA2, S2 ; TA3, S3 ; TA4, S4), où la troisième procédure d'étalonnage est de préférence réalisée après la deuxième procédure d'étalonnage et la deuxième procédure d'étalonnage est réalisée après la première procédure d'étalonnage.

6. Procédé selon l'une quelconque des revendications précédentes, dans lequel le procédé comprend plusieurs procédures d'étalonnage (TA2, S2 ; TA3, S3 ; TA4, S4) qui sont réalisées en fonction d'une itération, où chaque procédure d'étalonnage constitue une étape d'itération et où l'étape i) d'une étape d'itération prend en compte un ou plusieurs facteurs d'étalonnage déterminés dans l'ensemble des étapes d'itération précédentes.

7. Procédé selon l'une quelconque des revendications précédentes, dans lequel l'extraction de données cibles ($F^s_{pq}$) pour chaque cible de référence (RT) et chaque canal (pq) à l'étape i) d'au moins une procédure d'étalonnage comprend une compression de distance et une correction en fonction de la section transversale de radar connue et la position connue de la cible de référence respective (RT) au sol.

8. Procédé selon l'une quelconque des revendications précédentes, dans lequel l'extraction de données cibles ($F^s_{pq}$) pour chaque cible de référence (RT) et chaque canal (pq) à l'étape i) d'au moins une procédure d'étalonnage comprend une suppression de fouillis pour supprimer des échos radar provenant de diffuseurs autres que la cible de référence respective (RT).

9. Procédé selon l'une quelconque des revendications précédentes, dans lequel le procédé comprend une procédure d'étalonnage séparée (TA1, S1) outre la ou les procédures d'étalonnage (TA2, S2 ; TA3, S3 ; TA4, S4), où la procédure d'étalonnage séparée (TA1, S1) comprend les étapes suivantes :

a) en utilisant les section transversale de radar et position au sol connues pour chaque cible de référence (RT), extraire des données cibles ($F^s_{pq}$) pour chaque cible de référence (RT) dans chaque canal (pq) des données brutes de RSO ($D_{pq}$) et déterminer la variation d'un retard résiduel ($\delta\tau^s_{pq}$) sur différents échos radar provenant de chaque cible de référence (RT) dans chaque canal (pq), où le retard résiduel ($\delta\tau^s_{pq}$) pour un canal respectif (pq) représente la différence entre le temps de propagation de la transmission d'une impulsion radar jusqu'à réception de son écho radar en fonction des positions des centres de phase d'élément d'antenne de transmission et de réception du canal respectif (pq) et en fonction de la position connue de la cible de référence respective (RT) au sol d'un côté et le temps de propagation correspondant en fonction des données cibles pour la cible de référence respective (RT) de l'autre ;
b) estimer des variations de phase et d'amplitude dépendant de la fréquence au sein de la largeur de bande des échos radar en déterminant des facteurs d'étalonnage sous la forme de termes de correction ($\Delta C_e$) pour les éléments d'antenne respectifs (101, 102, 103) en fonction d'une minimisation de fonctions d'erreur, où au moins une fonction d'erreur est définie sur différents échos radar provenant de chaque cible de référence (RT) dans chaque canal (pq), l'au moins une fonction d'erreur étant définie en fonction d'une fonction de réponse de fréquence pour chaque écho radar provenant de la cible de référence respective (RT) dans le canal respectif (pq), où la fonction de réponse de fréquence est dérivée des données cibles ($F^s_{pq}$) et de la variation du retard résiduel ($\delta\tau^s_{pq}$) obtenus à l'étape a).

10. Procédé selon la revendication 9 en combinaison avec la revendication 6, dans lequel la procédure d'étalonnage séparée (TA1, S1) fait partie de l'itération et forme une étape d'itération en son sein, où l'étape i) de l'ensemble des étapes d'itération après l'étape d'itération de la procédure d'étalonnage séparée (TA1, S1) prend en compte les facteurs d'étalonnage déterminés à l'étape b).

11. Procédé selon l'une quelconque des revendications précédentes, dans lequel, après avoir réalisé la ou les procédures d'étalonnage, une ou plusieurs constantes d'étalonnage ($\Delta RCS_e$, $\Delta\tau_e$, $\Delta\o_e$) sont déterminées, dont l'une quelconque ($\Delta RCS_e$, $\Delta\tau_e$, $\Delta\o_e$) est fournie pour être appliquée dans un traitement ultérieur d'autres données brutes de RSO en tant que corrections globales constantes aux données brutes de RSO entières ou images entières dérivées des données brutes de RSO.

12. Appareil de traitement assisté par ordinateur de données brutes de RSO ($D_{pq}$), comprenant des échos radar provenant du sol qui sont la réponse à des impulsions radar (RP) qui ont été transmises par des éléments d'antenne (101, 102, 103) d'un capteur radar (1) sur au moins un objet volant (SA) se déplaçant dans une direction azimutale (x) au-dessus du sol et où les échos radar ont été reçus par des éléments d'antenne (101, 102, 103) du capteur radar (1), les données brutes de RSO ($D_{pq}$) incluant des échos radar provenant de cibles de référence (RT) avec des sections transversales de radar et positions au sol connues, et étant représentées par des acquisitions de données pour plusieurs canaux (pq), chaque canal (pq) désignant des impulsions radar transmises par un élément d'antenne spécifique (101, 102, 103) et des échos radar reçus par un élément d'antenne spécifique (101, 102, 103) à des positions de capteur radar et des angles d'attitude de capteur radar fournis par un sous-système de navigation sur l'au moins un objet volant (SA), où l'acquisition de données pour un canal (pq) comprend une pluralité d'échantillons de données pour plusieurs positions azimutales et plusieurs positions de distance, les positions de distance correspondant à différentes distances du capteur radar (1) au sol,

dans lequel l'appareil est configuré pour réaliser un procédé comprenant une ou plusieurs procédures d'étalonnage (TA2, S2 ; TA3, S3 ; TA4, S4), chaque procédure d'étalonnage comprenant les étapes suivantes :

i) en utilisant les section transversale de radar et position au sol connues pour chaque cible de référence (RT), extraire des données cibles ($F^s_{pq}$) pour chaque cible de référence (RT) dans chaque canal (pq) des données brutes de RSO ($D_{pq}$) et déterminer une variation d'une ou plusieurs mesures ($\delta\o^s_{pq}$, $\delta RCS^s_{pq}$, $\delta\o^3_{pq,uv}$) au sein d'un ensemble d'échos radar provenant de chaque cible de référence (RT) pour chaque canal (pq) ou pour chaque combinaison de deux canaux (pq) en fonction des données cibles ($F^s_{pq}$) ;

ii) déterminer un ou plusieurs facteurs d'étalonnage sous la forme d'un ou plusieurs termes de correction ($\Delta A_e$, $\Delta L_e$, $\Delta L_e^{inf}$) pour un ou plusieurs paramètres de capteur du capteur radar (1) en fonction d'une optimisation comprenant l'objectif d'optimisation de minimiser la variation de la ou des mesures ($\delta\o^s_{pq}$, $\delta RCS^s_{pq}$, $\delta\o^3_{pq,uv}$) pour l'ensemble des cibles de référence (RT) et pour l'ensemble des canaux (pq) ou l'ensemble des combinaisons de deux canaux (pq).

13. Appareil selon la revendication 12, dans lequel l'appareil est configuré pour réaliser un procédé selon une des revendications 2 à 11.

14. Produit de programme informatique comprenant du code de programme stocké sur un support lisible par une machine, dans lequel le code de programme est configuré pour réaliser un procédé selon une des revendications 1 à 11, lorsque le code de programme est exécuté sur un ordinateur.

15. Programme informatique comprenant du code de programme, dans lequel le code de programme est configuré pour réaliser un procédé selon une des revendications 1 à 11, lorsque le code de programme est exécuté sur un ordinateur.

Fig. 1

Calibration Correction Estimation

Reference Target Analysis

LI

IN

$D_{pq}$, pq

TA1

Target Analysis
$F^s_{pq}$, $\delta\phi^s_{pq}$, $w^s_{pq}$, $\tau^s_{pq}$, $\delta RCS^s_{pq}$

S101

Acquisition Geometry

S102

Response Model

S103

Response Correction

S104

Clutter Suppression

S105

Residual Error Analysis

S1

Residual Range IRF
$\Delta C_e$

TA2

Target Analysis

S2

Element Mount Angles
$\Delta A_e$

TA3

Target Analysis

S3

Element Lever Arms
$\Delta L_e$, $\Delta_c$

TA4

Target Analysis

S4

Element Baselines
$\delta\phi^s_{pq,uv}$, $\Delta L^{inf}_e$

TA5

Target Analysis

S5

Calibration Constants

# Fig. 2

# EP 3 364 212 B1

## REFERENCES CITED IN THE DESCRIPTION

**Non-patent literature cited in the description**

- **PING WEN JIANG et al.** External calibration of the CRS-1 satellite. *Proceedings of the 3rd International Conference on Computational Electromagnetics and its Applications*, 01 November 2004, 395-398
- **DALE C. GRIFFITH**. Phase Error Compensation Technique for Improved Synthetic Aperture Radar Performance. *John Hopkins APL Tech. Digest*, 01 January 1997, vol. 18 (3), 358-364

- **PAU PRATS-IRAOLA et al.** High precision SAR focusing of TerraSAR-X experimental staring spotlight data. *International Geoscience and Remote Sensing Symposium*, 22 July 2012, 3576-3579